# EUROPÄISCHE PATENTSCHRIFT

(11) **EP 3 250 771 B1**
(45) Veröffentlichungstag und Bekanntmachung des Hinweises auf die Patenterteilung: **13.04.2022**
(21) Anmeldenummer: 15825784.0
(22) Anmeldetag: 14.12.2015
(51) Int. Cl.: E05F 1/10

(54) **ANTRIEBSVORRICHTUNG FÜR EIN BEWEGBARES MÖBELTEIL**
DRIVE DEVICE FOR A MOVABLE FURNITURE PART
DISPOSITIF D'ENTRAÎNEMENT POUR PARTIE DE MEUBLE MOBILE

(30) Priorität: 29.01.2015 AT 392015
(43) Veröffentlichungstag der Anmeldung: 06.12.2017
(73) Patentinhaber: Julius Blum GmbH, 6973 Höchst (AT)
(72) Erfinder: DUBACH, Fredi, 8344 Bäretwil (CH); RÜCKER, Marco, 6845 Hohenems (AT)
(74) Vertreter: Torggler & Hofmann Patentanwälte - Innsbruck
(86) Internationale Anmeldenummer: PCT/AT2015/000159
(87) Internationale Veröffentlichungsnummer: WO 2016/118984

(56) Entgegenhaltungen:
- WO-A1-2013/134797
- WO-A2-2013/017666
- AT-U1- 10 097
- CN-A- 103 742 016
- DE-U1-202005 002 433

## Beschreibung

Die Erfindung betrifft eine Antriebsvorrichtung für ein bewegbares Möbelteil, mit einem spannbaren Ausstoßkraftspeicher, einem vom Ausstoßkraftspeicher kraftbeaufschlagten Ausstoßelement zum Durchführen einer Ausstoßbewegung des bewegbaren Möbelteils aus einer Schließstellung in eine Offenstellung, wobei durch eine Überdrückbewegung des bewegbaren Möbelteils in eine hinter der Schließstellung liegende Überdrückstellung die Ausstoßbewegung einleitbar ist und einer Spannvorrichtung zum Spannen des Ausstoßkraftspeichers mit einer bei der Ausstoßbewegung abgebbaren Energie. Weiters betrifft die Erfindung ein Möbel mit einem Möbelkorpus, einem bewegbaren Möbelteil und einer solchen Antriebsvorrichtung.

In der Möbelbeschlägeindustrie gibt es schon seit vielen Jahren diverse Arten von Antriebsvorrichtungen, um ein einfaches Ausstoßen eines bewegbaren Möbelteils (wie beispielsweise eine Schublade oder eine Möbeltüre) aus einer Schließstellung zu ermöglichen. Dadurch muss ein Benutzer nicht mehr am bewegbaren Möbelteil ziehen um dieses zu öffnen, sondern er kann durch eine einfache Auslösebewegung (z.B. Überdrücken des bewegbaren Möbelteils) das Ausstoßen bzw. Öffnen aktivieren bzw. initiieren. Einige Beispiele dafür gehen aus den Schriften WO 2012/084594 A1, WO 2014/114514 A1, WO 2014/165876 A1, WO 2013/017666 A2, WO 2013/134797 A1, CN103742016 A und WO 2013/134799 A1 hervor.

Eine Problematik bei mechanischen Antriebsvorrichtungen liegt meist darin, wie und wo der Ausstoßkraftspeicher gespannt wird. Bei den einfachsten Varianten wird ein Ausstoßkraftspeicher im letzten Schließbewegungsbereich vor Erreichen der Schließstellung gespannt (z.B. nach dem Kugelschreiberprinzip). Beim Ausstoßen erfolgt dann das aktive Ausstoßen entlang desselben Bewegungsbereichs in Öffnungsrichtung.

Es gibt aber auch andere Antriebsvorrichtungen, bei denen der Ausstoßkraftspeicher beim Öffnen oder Schließen weiter außen (also nicht im letzten Schließ- bzw. Öffnungsbereich) gespannt wird. Ein Beispiel dafür ist in der AT 008 629 U1 angegeben. Eine ähnliche Vorrichtung geht auch aus der DE 198 23 305 A1 hervor.

Die vorliegende Erfindung betrifft weiters eine gattungsbildende Antriebsvorrichtung, wobei vom bewegbaren Möbelteil beim Spannen des Ausstoßkraftspeichers über die Spannvorrichtung ein Möbelteil-Spannweg zurücklegbar ist, in welchem der Ausstoßkraftspeicher von einer entspannten oder teilgespannten Stellung entlang einem Kraftspeicher-Spannweg in eine gespannte Stellung bewegbar ist, und wobei vom bewegbaren Möbelteil beim Ausstoßen des bewegbaren Möbelteils über das Ausstoßelement ein Möbelteil-Ausstoßweg zurücklegbar ist, in welchem der Ausstoßkraftspeicher von der genannten gespannten Stellung entlang einem Kraftspeicher-Entspannweg in die genannte entspannte oder teilgespannte Stellung bewegbar ist.

Dazu geht aus der WO 2013/017666 A2 eine Antriebsvorrichtung hervor, bei welcher durch Händisches Ziehen in Öffnungsrichtung die Druckfeder über eine Spannstange gespannt wird.

Ein Problem, das beim Stand der Technik oftmals auftritt, ist, dass das Laden des Ausstoßkraftspeichers über einen relativ langen Möbelteilbewegungsweg beim Öffnen und/oder Schließen erfolgen muss. Somit muss ein Benutzer diese Spannbewegung relativ lange durchführen.

Die Aufgabe der vorliegenden Erfindung liegt daher darin, derartige Antriebsvorrichtungen zu verbessern bzw. eine alternative Spannmöglichkeit zu schaffen. Zur Lösung der gestellten Aufgaben ist die vorliegende Erfindung durch die Merkmale der beigefügten Ansprüche gekennzeichnet.

Dies wird unter anderem dadurch gelöst, dass der Möbelteil-Ausstoßweg größer ist als der Möbelteil-Spannweg. Das heißt, es wird nur ein relativ kleiner Möbelteilbewegungsweg (Möbelteil- Spannweg) verwendet, um dennoch nach dem Überdrücken einen größeren Möbelteilbewegungsweg (Möbelteil-Ausstoßweg) für die Ausstoßbewegung zur Verfügung zu haben.

Erfindungsgemäß ist vorgesehen, dass der Möbelteil-Spannweg zum Großteil dem Möbelteilbewegungsweg während der Überdrückbewegung entspricht. Anders ausgedrückt kann also vorgesehen sein, dass bei der Überdrückbewegung durch die Spannvorrichtung nahezu 100% der bei der Ausstoßbewegung vom Ausstoßkraftspeicher abgegebenen Energie in den Ausstoßkraftspeicher einbringbar ist. Vor allem wenn der Möbelteil-Spannweg im Wesentlichen genau der Überdrückbewegung entspricht hat dies den Vorteil, dass einem Benutzer das Spannen während dem normalen Möbelteilbewegungsweg überhaupt nicht auffällt, da es ja nur bei Überdrückbewegung stattfindet.

Um einen möglichst kurzen Möbelteil-Spannweg zu erhalten, ist bevorzugt vorgesehen, dass der Möbelteil-Ausstoßweg zumindest doppelt, vorzugsweise zumindest viermal, so groß ist wie der Möbelteil-Spannweg. Das Laden des Ausstoßkraftspeichers und das Entladen des Ausstoßkraftspeichers muss nicht mit einer linearen Energieabgabe oder einem linearen Energieeintrag erfolgen. Vielmehr können hier auch Kurvenverläufe oder unterschiedlich steile Lade- oder Entladevorgänge, je nach Art und Ausbildung der Feder bzw. der Kraftspeichers, vorgesehen sein. Bevorzugt ist dazu passend vorgesehen, dass das, vorzugsweise über den Möbelteil-Spannweg gemittelte, Verhältnis von Kraftspeicher-Spannweg zu Möbelteil-Spannweg bei der Überdrückbewegung größer ist als das, vorzugsweise über den Möbelteil-Ausstoßweg gemittelte, Verhältnis von Kraftspeicher-Entspannweg zu Möbelteil-Ausstoßweg bei der Ausstoßbewegung.

Für die Umsetzung der vorliegenden Erfindung gibt es unterschiedliche konkrete Ausführungen. Im Folgenden sind zwei Varianten ausführlich erläutert:
Gemäß der ersten Ausführungsvariante weist die Antriebsvorrichtung erfindungsgemäß eine Übersetzungsvorrichtung auf, welche zwischen einem Spannelement der Spannvorrichtung und dem Ausstoßelement angeordnet ist, wobei die Übersetzung bzw. das Übersetzungsverhältnis zwischen dem Spannelement und dem Ausstoßkraftspeicher beim Spannen des Ausstoßkraftspeichers anders, vorzugsweise größer, ist als zwischen dem Ausstoßelement und dem Ausstoßkraftspeicher beim Ausstoßen des bewegbaren Möbelteils. Das heißt, dass auf einem kürzeren Weg (Möbelteil-Spannweg) über die Übersetzungsvorrichtung dieselbe Energie eingebracht wird, die dann in einem längeren Weg (Möbelteil-Ausstoßweg) abgegeben wird. In diesem Fall ist bevorzugt vorgesehen, dass das Spannelement und das Ausstoßelement separat ausgebildet sind.

Gemäß einem konkreten Ausführungsbeispiel dieser ersten Ausführungsvariante ist bevorzugt vorgesehen, dass die Spannvorrichtung ein Gehäuse, einen mit dem Gehäuse verbundenen Achsbolzen, eine am Achsbolzen drehbar gelagerte Spannscheibe mit Rastelementen, das mit der Spannscheibe exzentrisch verbundene Spannelement, eine am Achsbolzen drehbar gelagerte Übersetzungsscheibe mit Rastanschlägen für die Rastelemente und den Ausstoßkraftspeicher, welcher mit einer ersten Federbasis an der Spannscheibe und mit einer zweiten Federbasis am Gehäuse gehalten ist, aufweist.

Für ein einfaches Spannen ist bevorzugt vorgesehen, dass bei der Überdrückbewegung die Spannscheibe durch das Spannelement relativ zur Übersetzungsscheibe drehbar ist, wodurch der Ausstoßkraftspeicher von der genannten entspannten oder teilgespannten Stellung in die genannte gespannte Stellung gelangt, wobei in der genannten gespannten Stellung die Spannscheibe über zumindest eines der Rastelemente an einem Rastanschlag der Übersetzungsscheibe verrastet ist.

Da das Spannelement bei dieser ersten Ausführungsvariante separat vom, vorzugsweise am Gehäuse bewegbar gelagerten, Ausstoßelement ausgebildet ist, ist bevorzugt vorgesehen, dass am Ausstoßelement ein Hebel über ein Ende bewegbar gelagert ist und der Hebel am anderen Ende mit einem Zahnrad exzentrisch und bewegbar verbunden ist, wobei das Zahnrad mit an der Übersetzungsscheibe angeordneten Zähnen kämmt. Somit kann über die Übersetzungsscheibe das Ausstoßelement betätigt werden. Diese Komponenten bilden gemeinsam mit der Spannscheibe, dem Ausstoßkraftspeicher und der Übersetzungsscheibe die Übersetzungsvorrichtung.

Im Gegensatz zur ersten Ausführungsvariante wird bei der zweiten Ausführungsvariante keine Übersetzung anhand einer Zahnradübersetzung durchgeführt. Vielmehr ist es bei der zweiten Ausführungsvariante so, dass erfindungsgemäß der Ausstoßkraftspeicher eine erste Federbasis und eine zweite Federbasis aufweist, wobei beim Spannen des Ausstoßkraftspeichers beide Federbasen relativ zu einem Gehäuse der Antriebsvorrichtung bewegbar sind, und beim Ausstoßen die erste Federbasis relativ zum Gehäuse festsitzt, und die zweite Federbasis relativ zum Gehäuse bewegbar ist. Dadurch kann beim Spannen durch das Bewegen beider Federbasen ein kleinerer Möbelteilbewegungsweg genutzt werden, um dieselbe Energie einzubringen, die dann in einem größeren (nur in eine Richtung wirkenden) Möbelteilbewegungsweg für die Ausstoßbewegung genutzt wird.

Besonders bevorzugt wird dies dadurch verbessert, dass die Spannvorrichtung ein erstes und ein zweites bewegbares, vorzugsweise jeweils am Gehäuse drehbar gelagertes, Spannelement aufweist, wobei die erste Federbasis des Ausstoßkraftspeichers am ersten Spannelement und die zweite Federbasis des Ausstoßkraftspeichers am zweiten Spannelement gehalten ist. Bei dieser Ausführungsvariante ist es im Gegensatz zur ersten Ausführungsvariante von Vorteil, wenn das zweite Spannelement das Ausstoßelement bildet. Somit sind weniger Teile notwendig.

Weiters ist bevorzugt vorgesehen, dass bei der Überdrückbewegung das erste Spannelement und das zweite Spannelement zueinander und relativ zum Gehäuse bewegbar sind, wodurch der Ausstoßkraftspeicher von der genannten entspannten oder teilgespannten Stellung in die genannte gespannte Stellung gelangt. Um die Bewegung nur einer Federbasis zu garantieren, ist bevorzugt vorgesehen, dass während der Ausstoßbewegung eines der Spannelemente, vorzugsweise das erste Spannelement, während zumindest eines Großteils der Ausstoßbewegung über eine Haltevorrichtung am Gehäuse gehalten ist.

Schutz wird auch begehrt für ein Möbel mit einem Möbelkorpus, einem bewegbaren Möbelteil und einer erfindungsgemäßen Antriebsvorrichtung für das bewegbare Möbelteil.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: eine Ansicht eines Möbels mit einer Antriebsvorrichtung,
- Fig. 2: den Möbelteilbewegungsweg im Vergleich mit der Energie des Ausstoßkraftspeichers beim Stand der Technik,
- Fig. 3: den Möbelteilbewegungsweg im Vergleich mit der Energie des Ausstoßkraftspeichers bei einer erfindungsgemäßen Antriebsvorrichtung,
- Fig. 4: eine Explosionsdarstellung einer ersten Ausführungsvariante der Antriebsvorrichtung,
- Fig. 5a - 12: den Bewegungsablauf einer Antriebsvorrichtung gemäß der ersten Ausführungsvariante,
- Fig. 13: eine Explosionsdarstellung einer Antriebsvorrichtung nach der zweiten Ausführungsvariante,
- Fig. 14: die Antriebsvorrichtung gemäß dem zweiten Ausführungsbeispiel in zusammengebautem Zustand und

- Fig. 15 - 21: den Bewegungsablauf der zweiten Ausführungsvariante der Antriebsvorrichtung.

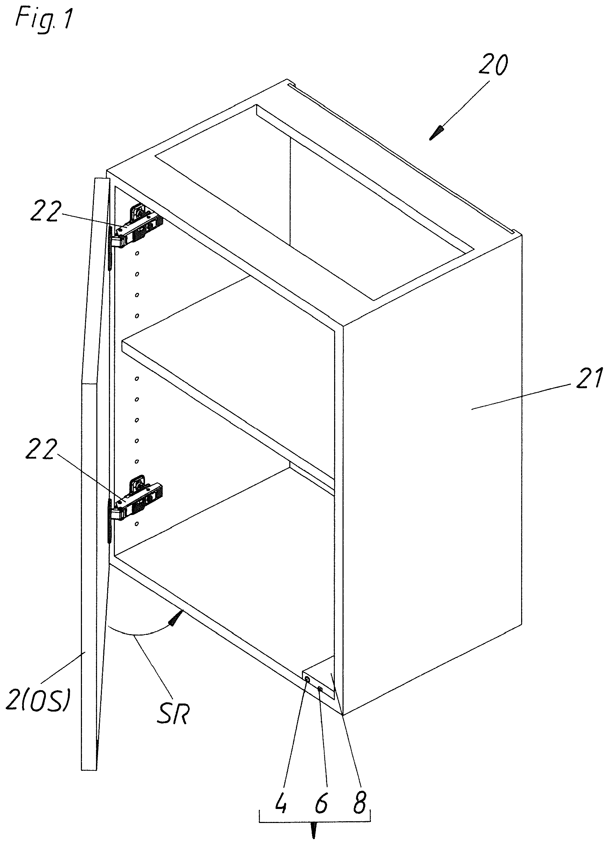

Fig. 1 zeigt ein Möbel 20, welches einen Möbelkorpus 21 und ein bewegbares Möbelteil 2 in Form einer Möbeltüre aufweist. Dieses bewegbare Möbelteil 2 befindet sich in der Offenstellung OS. Das bewegbare Möbelteil 2 ist über zwei Scharniere 22 bewegbar am Möbelkorpus 21 gelagert. Diese Scharniere 22 sind derart ausgestaltet, dass im letzten Abschnitt der in Schließrichtung SR ablaufenden Schließbewegung S ein aktives Einziehen des bewegbaren Möbelteils 2 in die Schließstellung SS erfolgt. Die Scharniere 22 können auch eine Dämpfvorrichtung zum gedämpften Einziehen des bewegbaren Möbelteils 2 aufweisen. Am Möbelkorpus 21 ist zudem eine Antriebsvorrichtung 1 in Form einer Ausstoßvorrichtung über ein Gehäuse 8 bzw. eine Montageplatte angebracht. Die Antriebsvorrichtung 1 weist bei dieser ersten Ausführungsvariante ein Spannelement 6 und ein vom Spannelement 6 separat ausgebildetes Ausstoßelement 4 auf.

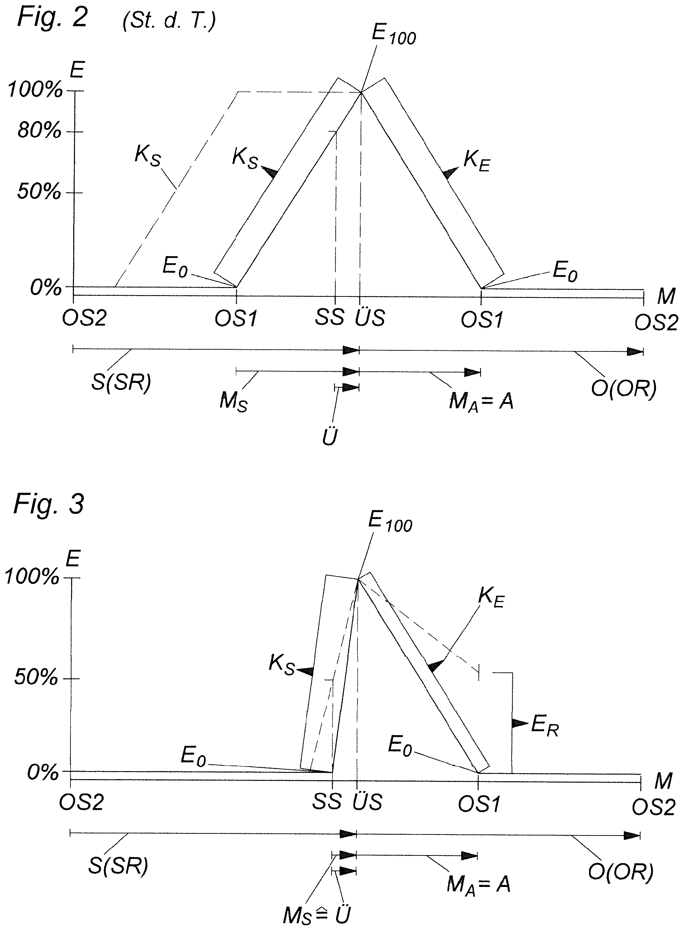

In Fig. 2 ist schematisch der Möbelteilbewegungsweg M im Vergleich zur (Lade-)Energie E des Ausstoßkraftspeichers 3 bei einer Antriebsvorrichtung nach dem Stand der Technik gezeigt. Horizontal ist der gesamte Möbelteilbewegungsweg M dargestellt, der sich aus der in Schließrichtung SR ablaufenden Schließbewegung S und der in Öffnungsrichtung OR ablaufenden Öffnungsbewegung O zusammensetzt. Bei der Schließbewegung S bewegt sich das bewegbare Möbelteil 2 von der zweiten Offenstellung OS2 zunächst in einem Freilauf bis zur ersten Offenstellung OS1. Während dieses Bewegungsabschnitts erfolgt kein Spannen des Ausstoßkraftspeichers 3, weswegen dieser in einer entspannten Stellung E₀ verbleibt (Die tiefgestellte Zahl nach dem "E" entspricht immer in etwa der prozentuellen Ladung des Ausstoßkraftspeichers 3 mit Energie E). Ab der ersten Offenstellung OS1 beginnt das Spannen des Ausstoßkraftspeichers 3. Dies ist dadurch angedeutet, dass sich die Ladeenergie E des Ausstoßkraftspeichers ab der ersten Offenstellung OS1 erhöht, bis es schließlich in der Überdrückstellung ÜS des bewegbaren Möbelteils 2 voll geladen ist. Das heißt, der Ausstoßkraftspeicher 3 befindet sich in der gespannten Stellung E₁₀₀. Zwischen dieser entspannten Stellung E₀ und der gespannten Stellung E₁₀₀ befindet sich der Kraftspeicher-Spannweg K_{S}. Prinzipiell ist es auch möglich, dass sich dieser Kraftspeicher-Spannweg K_{S} auch weiter außen befindet, wie dies durch die linksseitig dargestellte, strichlierte Linie angedeutet ist. Dies kann vor allem dann vorgesehen sein, wenn eine separate Einziehvorrichtung zum Einziehen des Möbelteils in eine Schließstellung SS vorgesehen ist. Wie aus der Fig. 2 weiters ersichtlich ist, wird der Kraftspeicher-Spannweg K_{S} des Ausstoßkraftspeichers 3 dadurch zurückgelegt, dass von einem Benutzer aktiv auf das bewegbare Möbelteil 2 in Schließrichtung SR gedrückt wird. Dieser aktive Möbelteilbewegungsweg M entspricht dem Möbelteil-Spannweg M_{S}, welcher zwischen der ersten Offenstellung OS1 und der Überdrückstellung ÜS verläuft. Wie aus Fig. 2 auch ersichtlich ist, ist bei Erreichen der Schließstellung SS der Ausstoßkraftspeicher erst zu etwa 80% geladen. Bei konkreten Ausführungsvarianten ist in der Schließstellung SS der Ausstoßkraftspeicher 3 meist bereits viel mehr geladen als in dieser schematischen Darstellung. Zwischen der Schließstellung SS und der Überdrückstellung ÜS liegt die Überdrückbewegung Ü des Möbelteilbewegungswegs M. Sobald die Überdrückbewegung Ü abgeschlossen ist und der Benutzer nicht mehr in Schließrichtung SR auf das bewegbare Möbelteil 2 drückt, beginnt durch das Entladen des Ausstoßkraftspeichers 3 die Ausstoßbewegung A. Diese Ausstoßbewegung A ist gleichzusetzen mit dem Möbelteilausstoßweg M_{A}, in welchem sich der Ausstoßkraftspeicher 3 zwischen der gespannten Stellung E₁₀₀ entlang dem Kraftspeicher-Entspannweg K_{E} bis in die entspannte Stellung E₀ bewegt. Dadurch ist wieder die erste Offenstellung OS1 erreicht. Danach kann das bewegbare Möbelteil 2 in einem Freilauf bis in die komplette zweite Offenstellung OS2 bewegt werden.

Nachteilig bei diesem bekannten Bewegungsablauf nach dem Stand der Technik ist, dass ein Benutzer in einem Großteil des Möbelteilbewegungswegs M (im Konkreten Fall bei der Schließbewegung S) keine gleichbleibende Bewegung des bewegbaren Möbelteils 2 erlebt, da ja im Bereich des Kraftspeicher-Spannwegs K_{S} ab der ersten Offenstellung OS1 aktiv eine größere Kraft auf das bewegbare Möbelteil 2 aufgebracht werden muss, als dies bei einem in Freilauf befindlichen bewegbaren Möbelteil 2 der Fall ist.

Deswegen ist der große Vorteil der vorliegenden Erfindung in Fig. 3 veranschaulicht, wonach der Kraftspeicher-Spannweg K_{S} erst beginnt, wenn die Schließstellung SS des bewegbaren Möbelteils 2 erreicht ist bzw. wonach der Großteil der Ladeenergie E in den Ausstoßkraftspeicher 3 erst eingebracht wird, wenn die Schließstellung SS des bewegbaren Möbelteils 2 erreicht ist. Dementsprechend ist bei der Fig. 3 der Möbelteil-Spannweg M_{S} sehr viel kürzer. Im Konkreten entspricht dieser Möbelteil-Spannweg M_{S} dem Überdrückweg Ü. Somit wird während der Überdrückbewegung Ü in einem relativ kurzen Bereich des Möbelteilbewegungswegs M die volle Energie E in den Ausstoßkraftspeicher 3 eingebracht, indem der Ausstoßkraftspeicher 3 von der entspannten Stellung E₀ (entspricht der Schließstellung SS) entlang dem Kraftspeicher-Spannweg K_{S} in die gespannte Stellung E₁₀₀ gelangt, welcher der Überdrückstellung ÜS des bewegbaren Möbelteils 2 entspricht. Sobald in dieser Überdrückstellung ÜS ein Benutzer nicht mehr auf das bewegbare Möbelteil 2 drückt, erfolgt die Ausstoßbewegung A ähnlich bzw. gleich wie bei bisher bekannten Antriebsvorrichtungen. Das heißt, diese Ausstoßbewegung A entspricht dem Möbelteil-Ausstoßweg M_{A}, welcher wesentlich größer ist als der Möbelteil-Spannweg M_{S}. Sobald die erste Offenstellung OS1 erreicht ist, kann dann das bewegbare Möbelteil 2 wieder in einem Freilauf bis in die vollkommene Offenstellung OS2 bewegt werden.

In Fig. 3 ist mit der durchgehenden Linie die Ladeenergie E des Ausstoßkraftspeichers 3 angegeben. In diesem Fall ist diese Linie idealisiert dargestellt. Natürlich können hier Abweichungen vorliegen. Vor allem kann die Ladeenergie E auch progressiv bzw. nicht linear ansteigen. Es können auch unterschiedlich steile Abschnitte sowohl beim Spannen als auch beim Entspannen vorhanden sein. Diese Fig. 3 soll den gemittelten Verlauf zwischen entspannter Stellung E₀ und gespannter Stellung E₁₀₀ schematisch veranschaulichen.

In Fig. 3 sind aber neben der grundsätzlichen Erklärung der Erfindungsideen auch noch leicht abgewandelte Varianten durch die strichpunktierten Linien angedeutet.

Die rechtsseitige strichpunktierte Linie entspricht der ersten konkreten Ausführungsvariante der Antriebsvorrichtung 1. Dabei ist es so, dass sich der Ausstoßkraftspeicher 3 am Ende der Ausstoßbewegung A in der genannten entspannten oder teilgespannten Stellung E₀₋₅₀ befindet, in welcher der Ausstoßkraftspeicher 3 noch teilweise gespannt ist und eine Restenergie E_{R} beinhaltet, wobei durch diese Restenergie E_{R} des Ausstoßkraftspeichers 3 das Ausstoßelement 4 nach dem Zurücklegen eines Ausstoßelement-Ausstoßwegs A_{A} über einen Ausstoßelement-Rückstellweg A_{R} in Schließrichtung SR bewegbar ist. Somit wird nur ein Teil der im Möbelteil-Spannweg M_{S} eingebrachten (Lade-)Energie E auch als (Ausstoß-)Energie zum Ausstoßen verwendet. Die Restenergie E_{R} wird im Konkreten zum Zurückbewegen des Ausstoßelements 4 in eine Ausgangsstellung verwendet.

Die linksseitige strichpunktierte Linie entspricht der zweiten konkreten Ausführungsvariante der Antriebsvorrichtung 1. Hierbei ist es so, dass sich der Ausstoßkraftspeicher 3 in der Schließstellung SS des bewegbaren Möbelteils 2 in der genannten entspannten oder teilgespannten Stellung E₀₋₅₀ befindet, wobei der Ausstoßkraftspeicher 3 bei Erreichen der Schließstellung SS durch eine Schließbewegung S des bewegbaren Möbelteils 2 bereits teilweise gespannt ist. Dies bedeutet, dass das Spannen des Ausstoßkraftspeichers 3 bereits vor Erreichen der Schließstellung SS beginnt. Der Großteil, nämlich über 50 % der Ladeenergie E wird aber dennoch erst zwischen der Schließstellung SS und der Überdrückstellung ÜS in den Ausstoßkraftspeicher 3 eingebracht.

Für den Vergleich zwischen Möbelteil- Spannweg M_{S} und Möbelteilausstoßweg M_{A} ist es aber bei beiden Ausführungsvarianten notwendig, dieselbe entspannte oder teilgespannte Stellung E₀₋₅₀ des Kraftspeicher-Spannwegs K_{S} mit der derselben entspannten oder teilgespannten Stellung E₀₋₅₀ des Kraftspeicher-Entspannwegs K_{E} zu vergleichen. Daraus lässt sich immer ableiten, dass der Möbelteil-Spannweg M_{S} kleiner ist als der Möbelteilausstoßweg M_{A}.

In Fig. 3 lässt sich zudem herauslesen, dass das Verhältnis K_{S}:M_{S} von Kraftspeicher-Spannweg K_{S} zu Möbelteil-Spannweg M_{S} bei der Überdrückbewegung Ü in etwa bei 9:1 liegt. Demgegenüber liegt das Verhältnis K_{E}:M_{A} von Kraftspeicher-Entspannweg K_{E} zu Möbelteilausstoßweg M_{A} bei der Ausstoßbewegung A bei etwa 9:6 bzw. 3:2. Dadurch ist das Verhältnis K_{S}:M_{S} größer als das Verhältnis K_{E}:M_{A}. Die Steigung entspricht näherungsweise der Übersetzung von Möbelteil-Spannweg M_{S} zu Kraftspeicher-Spannweg K_{S} bzw. von Kraftspeicher-Entspannweg K_{E} zu Möbelteil-Ausstoßweg M_{A}.

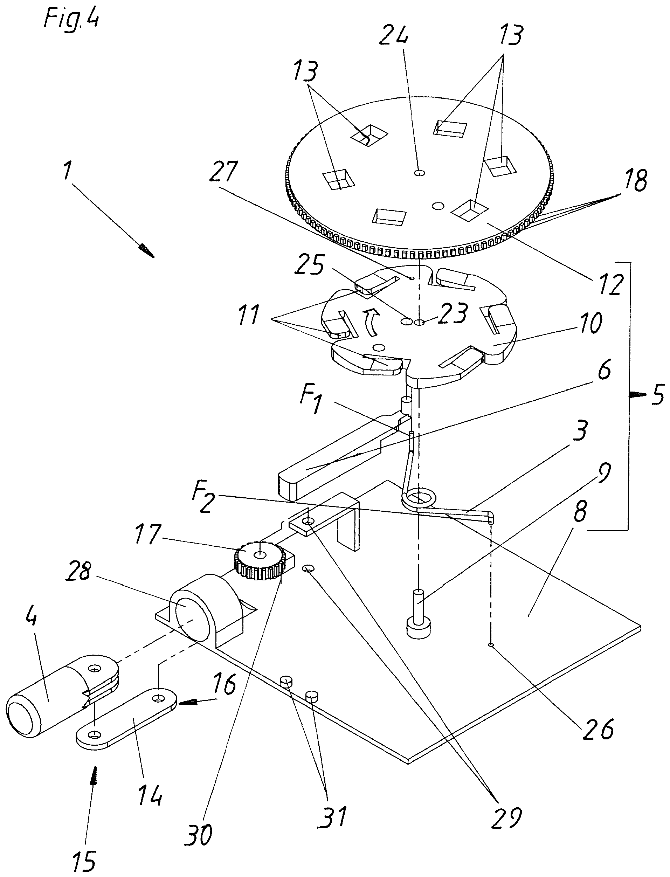

In Fig. 4 ist in einer Explosionsdarstellung die erste Ausführungsvariante einer Antriebsvorrichtung 1 abgebildet. Diese Antriebsvorrichtung 1 weist ein Gehäuse 8 (Basisplatte) auf. An diesem Gehäuse 8 ist der Achsbolzen 9 befestigt. Am Achsbolzen 9 ist die Spannscheibe 10 über die Ausnehmung 23 drehbar gelagert. Weiters ist am Achsbolzen 9 die Übersetzungsscheibe 12 über die Ausnehmung 24 drehbar gelagert. Um den Achsbolzen 9 herum ist der Ausstoßkraftspeicher 3 in Form einer Schenkelfeder gewickelt bzw. angeordnet. Mit der ersten Federbasis F₁ ist der Ausstoßkraftspeicher 3 in der Ausnehmung 27 der Spannscheibe 10 gehalten. Mit der zweiten Federbasis F₂ ist der Ausstoßkraftspeicher 3 in der Ausnehmung 26 des Gehäuses 8 gehalten. Die Spannscheibe 10 weist insgesamt sechs regelmäßig angeordnete Rastelemente 11 in Form von Federzungen auf. Diese Federzungen bzw. Rastelemente 11 korrespondieren mit den sechs in der Übersetzungsscheibe 12 ausgebildeten Rastanschlägen 13. In der Spannscheibe 10 ist eine exzentrisch angeordnete Ausnehmung 25 ausgebildet. In diese exzentrisch angeordnete Ausnehmung 25 greift ein Bolzen des Spannelementes 6 ein. Dieses Spannelement 6 ist zwischen den Führungselementen 31 geführt. Am äußeren Umfang der Übersetzungsscheibe 18 ist eine Vielzahl von Zähnen 18 angeordnet, welche mit den Zähnen des Zahnrades 17 kämmen. Dieses Zahnrad 17 ist über einen Drehbolzen 34 in dem im Gehäuse 8 ausgebildeten Drehlager 29 drehbar gelagert. Weiters ist am Zahnrad 17 eine Exzenterachse 30 angeordnet. An dieser Exzenterachse 30 ist ein Ende 16 des Hebels 14 über den Hebelgelenksbolzen 32 verbunden. Am anderen Ende 15 des Hebels 14 ist der Hebel 14 über einen Hebelgelenksbolzen 33 mit dem Ausstoßelement 4 verbunden. Dieses Ausstoßelement 4 ist wiederum in der am Gehäuse 8 ausgebildeten Führung 28 geführt.

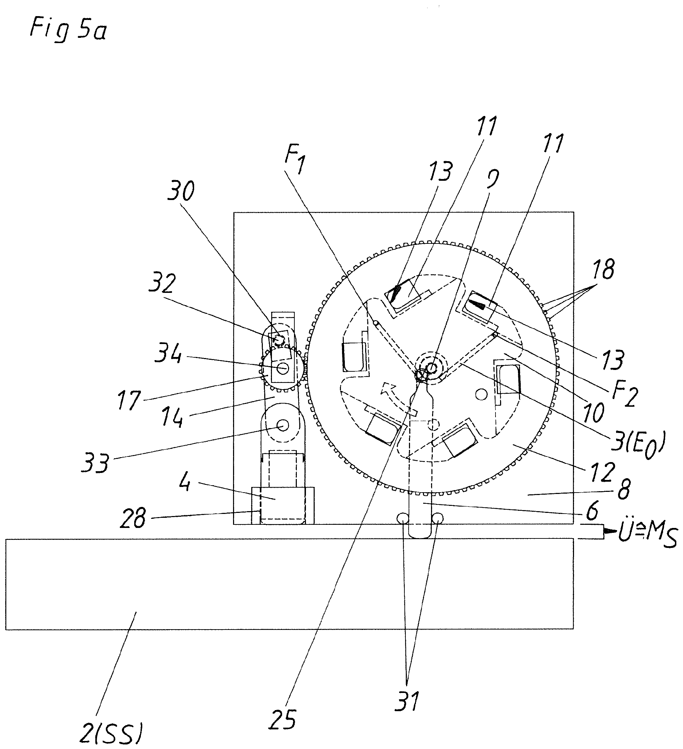

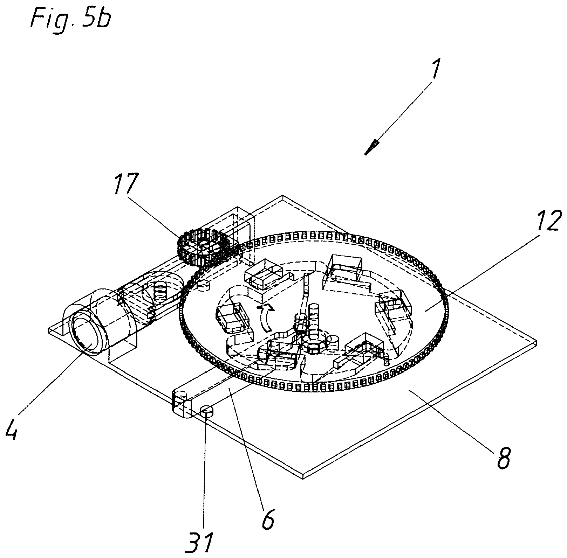

In den Fig. 5a und 5b ist in unterschiedlichen Ansichten die Antriebsvorrichtung 1 dargestellt, wenn sich das bewegbare Möbelteil 2 in der Schließstellung SS befindet. In dieser Schließstellung SS liegt das bewegbare Möbelteil 2 am Spannelement 6 an. Die Rastelemente 11 der Spannscheibe 10 liegen an den Rastanschlägen 13 der Übersetzungsscheibe 12 an, da der Ausstoßkraftspeicher 3 die Spannscheibe10 leicht gegen den Uhrzeigersinn beaufschlagt. Der Ausstoßkraftspeicher 3 befindet sich in der im Wesentlichen entspannten Stellung E₀.

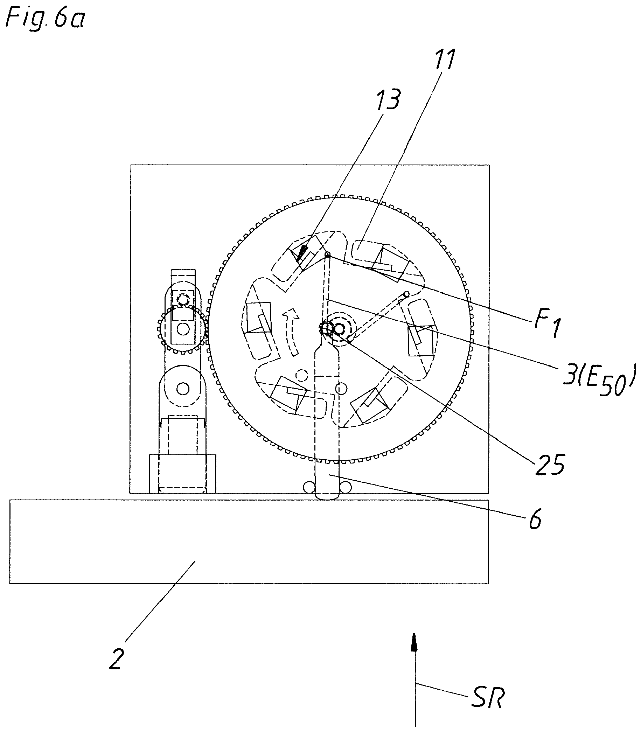

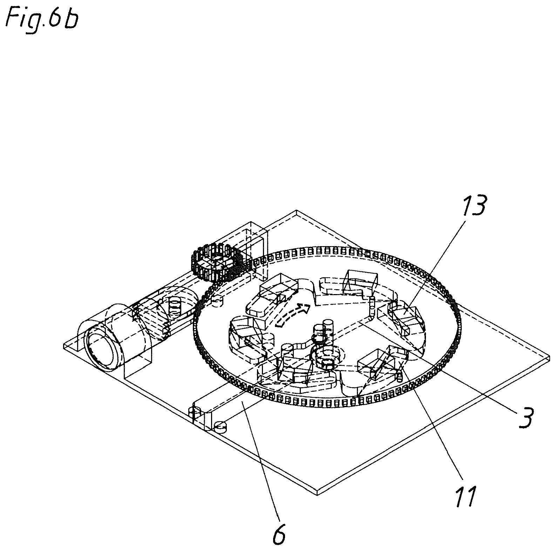

Wenn nun in Schließrichtung SR gemäß den Fig. 6a und 6b auf das bewegbare Möbelteil 2 gedrückt wird, so wird auch das Spannelement 6 in Schließrichtung SR bewegt. Dadurch, dass dieses Spannelement 6 an der exzentrisch angeordneten Ausnehmung 25 der Spannscheibe 12 drehbar gelagert ist, wird auch die Spannscheibe 10 um den Achsbolzen 9 im Uhrzeigersinn gedreht. Dadurch gelangt der Ausstoßkraftspeicher 3 in eine teilgespannte Stellung E₅₀. Durch diese Bewegung des Spannelements 6 in Schließrichtung SR wird die Spannscheibe 10 relativ zur Übersetzungsscheibe 12 im Uhrzeigersinn gedreht. Dadurch heben die Rastelemente 11 von den Rastanschlägen 13 ab und gleiten unter leichter Verbiegung der federzungenförmigen Rastelemente 11 entlang der Unterseite der Übersetzungsscheibe 12.

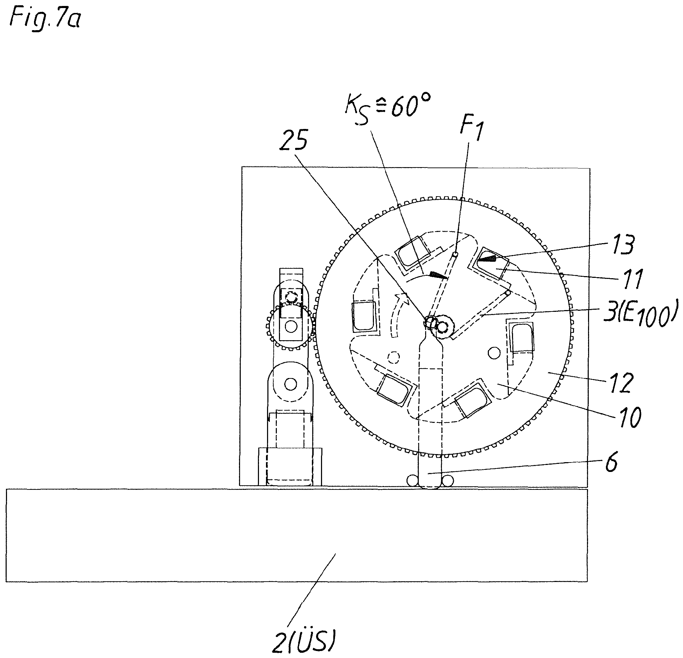

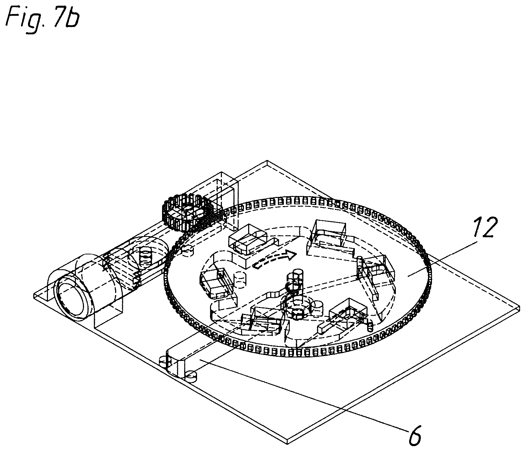

In den Fig. 7a und 7b ist die anschließende Überdrückstellung ÜS des bewegbaren Möbelteils 2 gezeigt, in welchem das Spannelement 6 gänzlich eingedrückt ist. Dadurch sind die Rastelemente 11 in die (im Uhrzeigersinn) nächstliegenden Ausnehmungen mit den Rastanschlägen 13 in der Übersetzungsscheibe 12 eingerastet. Gemäß den Fig. 7a und 7b hat sich die Spannscheibe 10 gegenüber den Fig. 5a und 5b um 60° gedreht. Dies entspricht dem Kraftspeicher-Spannweg K_{S}, welcher mit dem (relativ kurzen) Möbelteil-Spannweg M_{S} (siehe Fig. 5a) korrespondiert. In der Fig. 7a befindet sich der Ausstoßkraftspeicher 3 in der gespannten Stellung E₁₀₀.

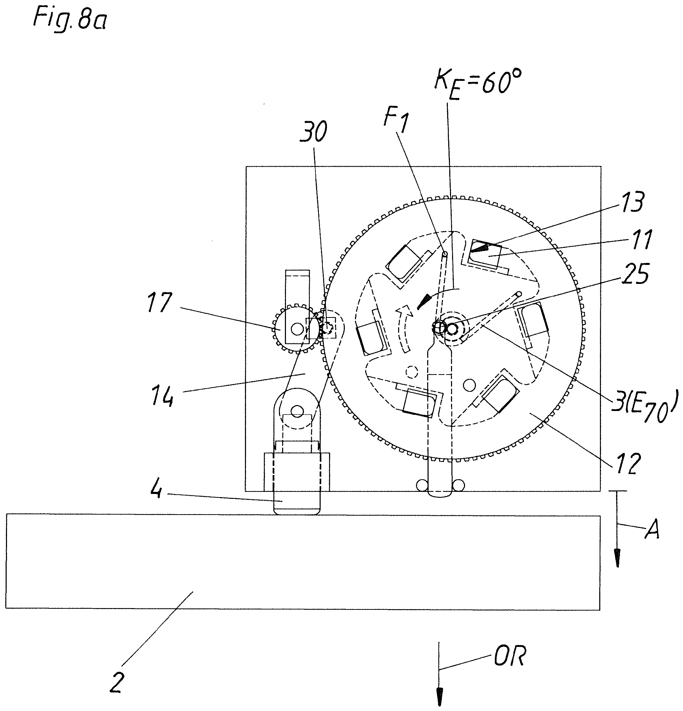

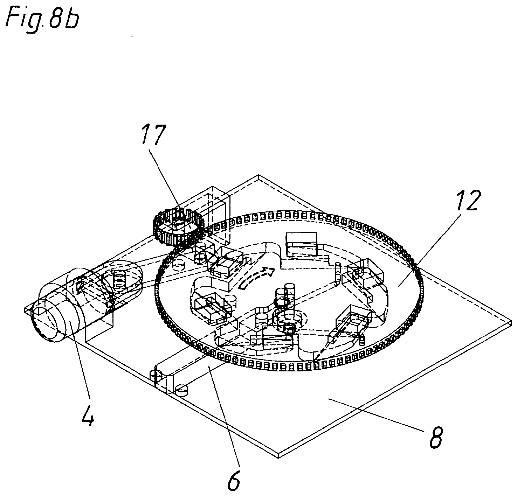

Sobald in dieser Überdrückstellung ÜS das bewegbare Möbelteil 2 losgelassen wird, kann sich der Ausstoßkraftspeicher 3, wie in den Fig. 8a und 8b angedeutet, bis zu einer teilgespannten Stellung E₇₀ entspannen. Da diese Entspannbewegung der Spannscheibe 10 gegen den Uhrzeigersinn erfolgt, wird auch über die Rastelemente 11 und die Rastanschläge 13 die Übersetzungsscheibe 12 gegen den Uhrzeigersinn mitbewegt. Aufgrund der Zähne 18 dieser Übersetzungsscheibe 12, die mit den Zähnen des Zahnrades 17 kämmen, wird das Zahnrad 17 im Uhrzeigersinn gedreht. Da sich dadurch auch die mit dem Zahnrad 17 verbundene Exzenterachse 30 und somit über den Hebelgelenksbolzen 32 auch der Hebel 14 bewegt, wird auch das Ausstoßelement 4 in Öffnungsrichtung OR bewegt. Da dieses Ausstoßelement 4 wiederum am bewegbaren Möbelteil 2 anliegt, wird die Ausstoßbewegung A des bewegbaren Möbelteils 2 initiiert.

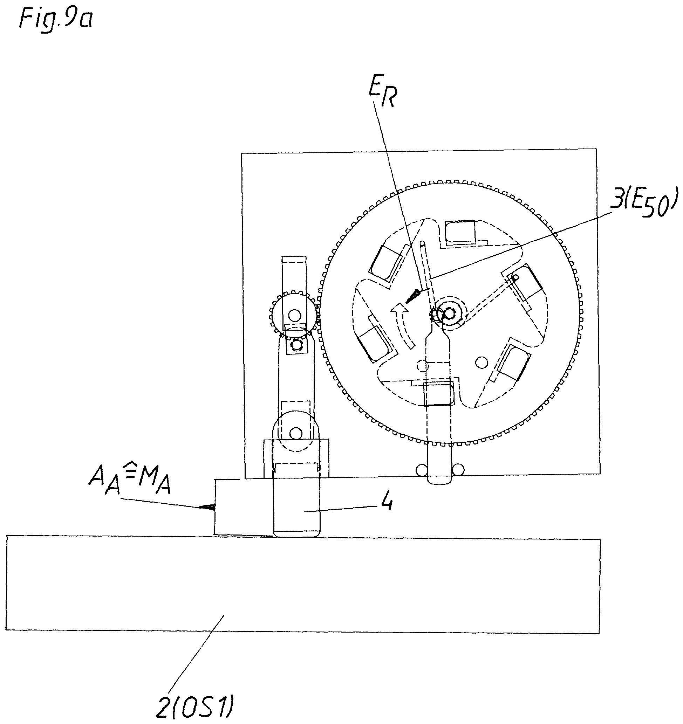

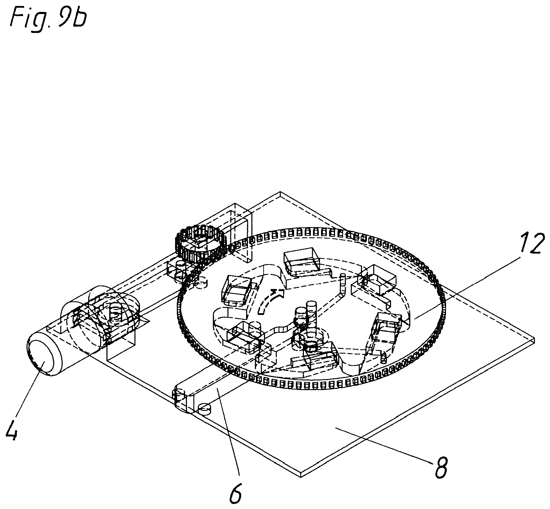

Gemäß den Fig. 9a und 9b hat das Zahnrad 17 eine halbe Umdrehung durchgeführt, wodurch der Ausstoßelement-Ausstoßweg A_{A} abgeschlossen ist. Dieser Ausstoßelement-Ausstoßweg A_{A} entspricht dem Möbelteilausstoßweg M_{A}. Dadurch gelangt das bewegbare Möbelteil 2 in die erste Offenstellung OS1. Da sich aber in dieser ersten Offenstellung OS1 der Ausstoßkraftspeicher 3 erst etwa zur Hälfte entspannt hat und somit die teilgespannte Stellung E₅₀ einnimmt, verbleibt noch eine Restenergie E_{R} im Ausstoßkraftspeicher 3.

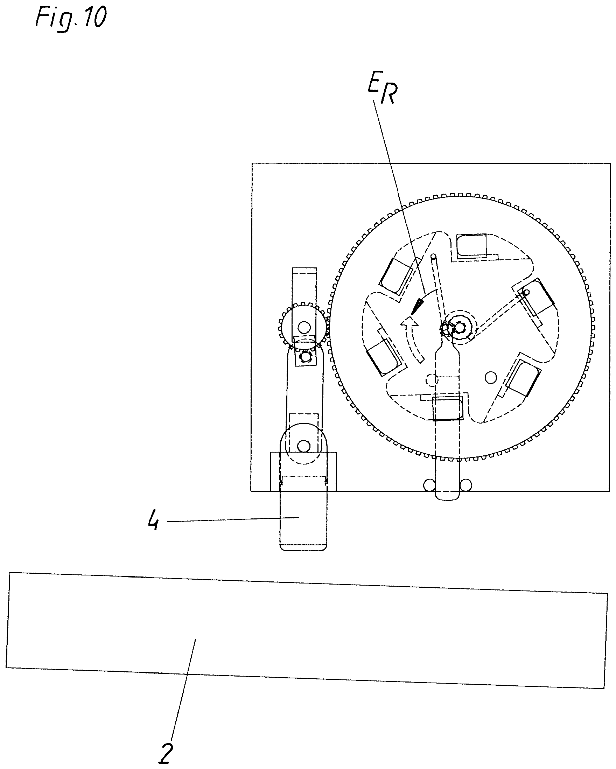

In Fig. 10 ist dargestellt, dass sich z.B. aufgrund des Ausstoßschwunges das bewegbare Möbelteil 2 vom Ausstoßelement 4 entfernt hat. Dies kann auch dadurch erfolgen, dass aktiv durch einen Benutzer am bewegbaren Möbelteil 2 gezogen wird.

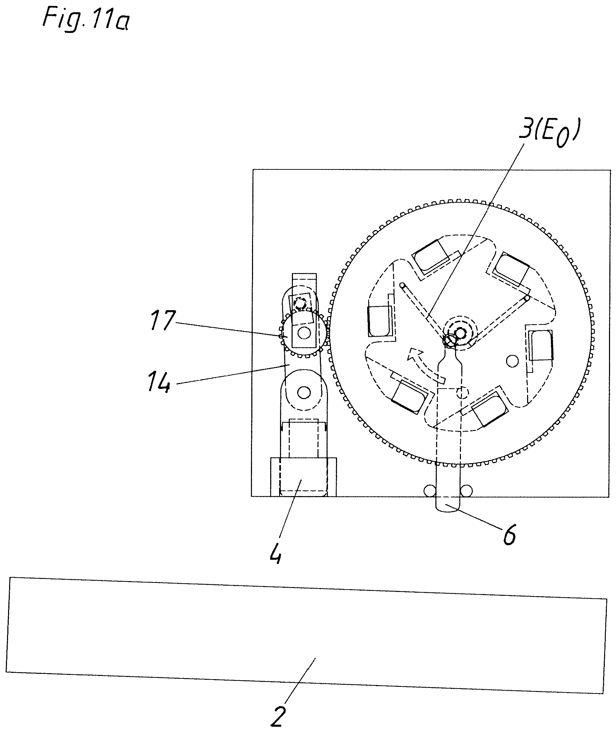

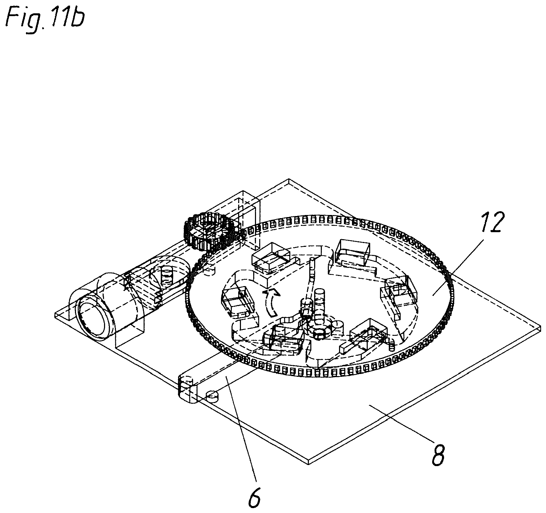

In den Fig. 11a und 11b ist ersichtlich, dass sich die Restenergie E_{R} des Ausstoßkraftspeichers 3 entladen hat. Dadurch hat sich auch das Zahnrad 17 wieder in seine Ausgangslage bewegt und das Ausstoßelement 4 ist gänzlich zurückgezogen. Das Spannelement 6, wie auch der Ausstoßkraftspeicher 3 und die Spannscheibe 10, befinden sich wieder in der Ausgangsstellung gemäß den Fig. 5a und 5b.

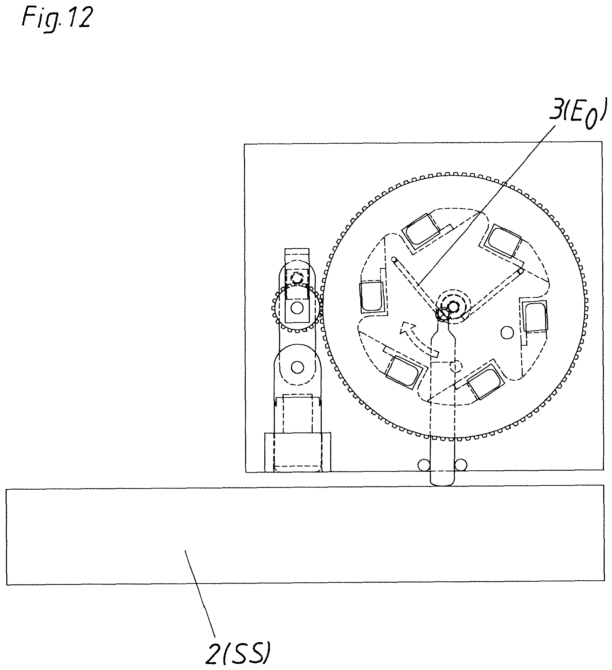

In Fig. 12 hat sich durch die Scharniere 22 auch das bewegbare Möbelteil 2 wieder in die Schließstellung SS bewegt, wo es am Spannelement 6 anliegt. Von dieser Schließstellung SS ausgehend kann wieder eine neue Spannbewegung des Ausstoßkraftspeichers 3 starten.

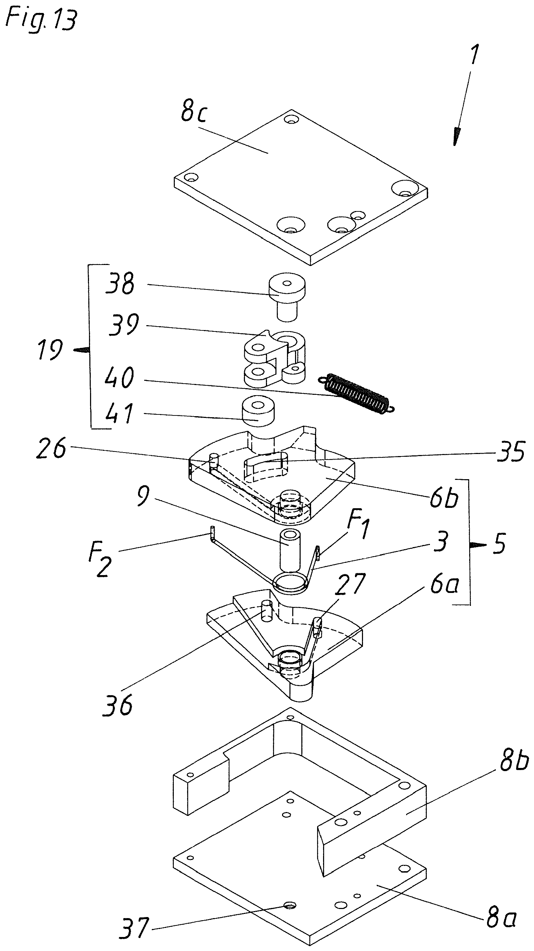

In Fig. 13 ist in einer Explosionsdarstellung die zweite Ausführungsvariante einer Antriebsvorrichtung 1 dargestellt. Dabei weist das Gehäuse 8 die drei Gehäuseteile 8a, 8b und 8c auf. Die Spannvorrichtung 5 setzt sich in diesem Fall aus dem ersten Spannelement 6a, dem Ausstoßkraftspeicher 3 und dem zweiten Spannelement 6b zusammen. Der Achsbolzen 9 ist an der Halteausnehmung 37 am Gehäuseteil 8a befestigt. Am Achsbolzen 9 ist sowohl das erste Spannelement 6a als auch das zweite Spannelement 6b drehbar gelagert. Die erste Federbasis F₁ des Ausstoßkraftspeichers 3 ist in der Ausnehmung 27 des ersten Spannelements 6a gehalten. Die zweite Federbasis F₂ des Ausstoßkraftspeichers 3 ist in der Ausnehmung 26 des zweiten Spannelements 6b gehalten. Im zweiten Spannelement 6b ist ein Langloch 35 ausgebildet, in welches ein Begrenzungsbolzen 36 des ersten Spannelements 6a eingreift. Weiters weist diese Antriebsvorrichtung 1 eine Haltevorrichtung 19 für eines der Spannelemente 6a, 6b auf. Diese Haltevorrichtung 19 weist ein am Gehäuse 8 befestigtes Drehlager 38 auf. An diesem Drehlager 38 ist der Schwenkhebel 39 schwenkbar gelagert. Am Schwenkhebel 39 wiederum ist eine Führungsrolle 41 bewegbar angebracht. Die Zugfeder 40 ist einerseits am Schwenkhebel 39 und andererseits am Gehäuse 8 gehalten.

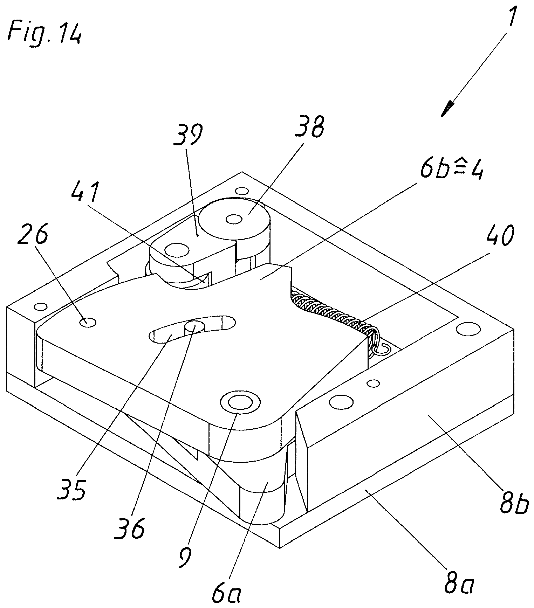

In Fig. 14 ist die Antriebsvorrichtung 1 gemäß der zweiten Ausführungsvariante in zusammengebautem Zustand dargestellt. Es ist auch ersichtlich, dass in diesem Fall das zweite Spannelement 6b das Ausstoßelement 4 der Antriebsvorrichtung 1 bildet.

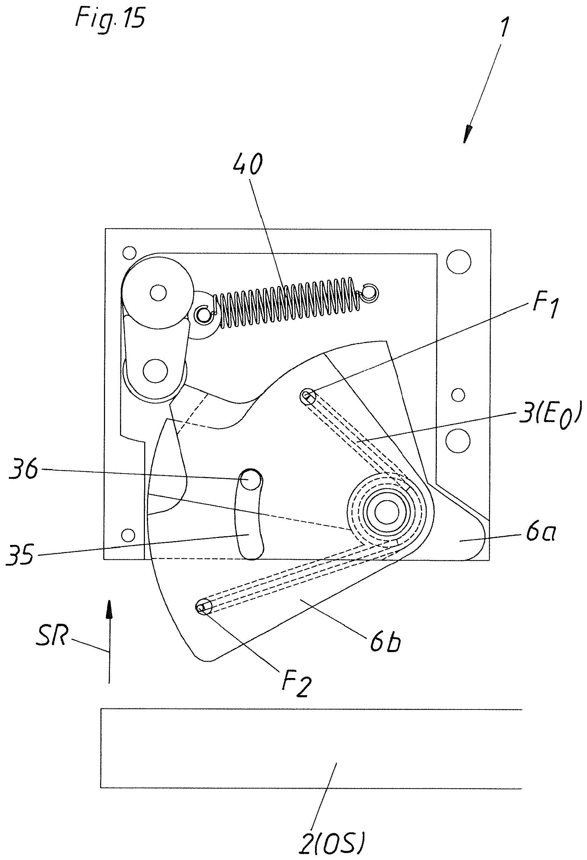

Gemäß Fig. 15 ist eine Draufsicht auf die Antriebsvorrichtung 1 mit dem bewegbaren Möbelteil 2 gezeigt. Dabei befindet sich das bewegbare Möbelteil 2 in einer Offenstellung OS. Da von außen kein Druck auf die Spannelemente 6a und 6b wirkt, befindet sich der Ausstoßkraftspeicher 36 in der entspannten Stellung E₀.Diese entspannte Stellung E₀ ist dadurch begrenzt, dass der Begrenzungsbolzen 6 rechtsseitig am Langloch 35 anliegt. Es kann somit durchaus noch eine gewisse Restenergie im Ausstoßkraftspeicher 3 vorhanden sein. Diese entspannte Stellung E₀ entspricht somit insofern einem "energiefreien" Ausstoßkraftspeicher 3, wie er durch den Begrenzungsbolzen 36 und das Langloch 35 bestimmt ist. Die Zugfeder 40 der Haltevorrichtung 19 ist gespannt und drückt die Führungsrolle 41 an das zweite Spannelement 6b.

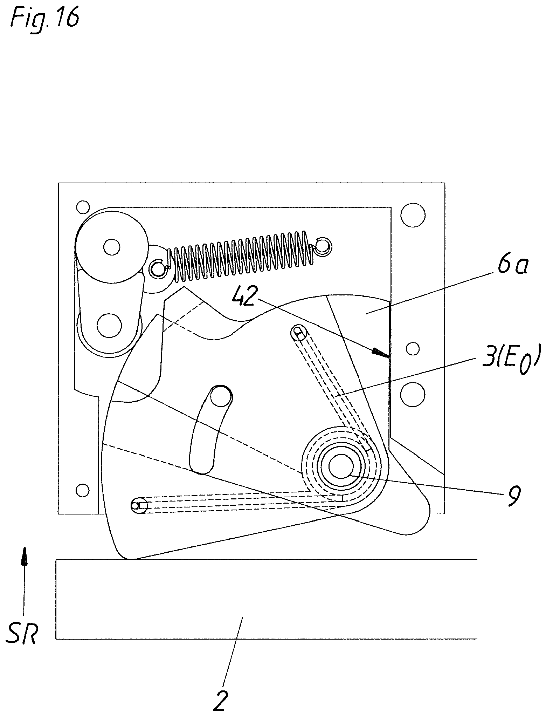

Wenn nun gemäß Fig. 16 das bewegbare Möbelteil 2 in Schließrichtung SR bewegt wird, so bewegen sich zunächst beide Spannelemente 6a und 6b synchron um den Achsbolzen 9, bis gemäß Fig. 16 das erste Spannelement 6a am Anschlag 42 des Gehäuses 8 anliegt. In dieser Fig. 16 befindet sich der Ausstoßkraftspeicher 3 immer noch in der entspannten Stellung E₀.

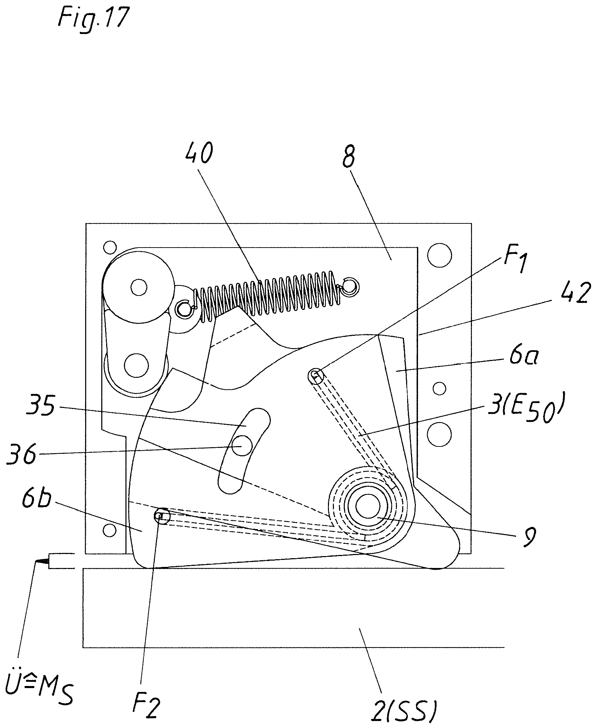

Wenn dann weiter auf das bewegbare Möbelteil 2 in Schließrichtung SR gedrückt wird, gelangt die Antriebsvorrichtung 1 in die Stellung gemäß Fig. 17. In dieser Fig. 17 ist der Ausstoßkraftspeicher 3 bereits zu einem Teil gespannt und befindet sich somit in einer teilgespannten Stellung E₅₀. Das bewegbare Möbelteil 2 befindet sich in etwa in der Schließstellung SS, in welcher das bewegbare Möbelteil 2 sowohl am zweiten Spannelement 6b als auch am ersten Spannelement 6a anliegt. Dadurch, dass das bewegbare Möbelteil 2 (im Idealfall genau ab der Schließstellung SS) an beiden Spannelementen 6a und 6b anliegt, werden beide Spannelemente 6a und 6b relativ zum Gehäuse 8 und zueinander bewegt. Das zweite Spannelement 6b bewegt sich im Uhrzeigersinn, wogegen sich das erste Spannelement 6a gegen den Uhrzeigersinn bewegt. Durch diese Relativbewegung der Spannelemente 6a und 6b zueinander werden auch die Federbasen F₁ und F₂ zueinander verschoben. Die Veränderung der Spannung des Ausstoßkraftspeichers 3 ist auch an der Position des Begrenzungsbolzens 36 im Langloch 35 ablesbar.

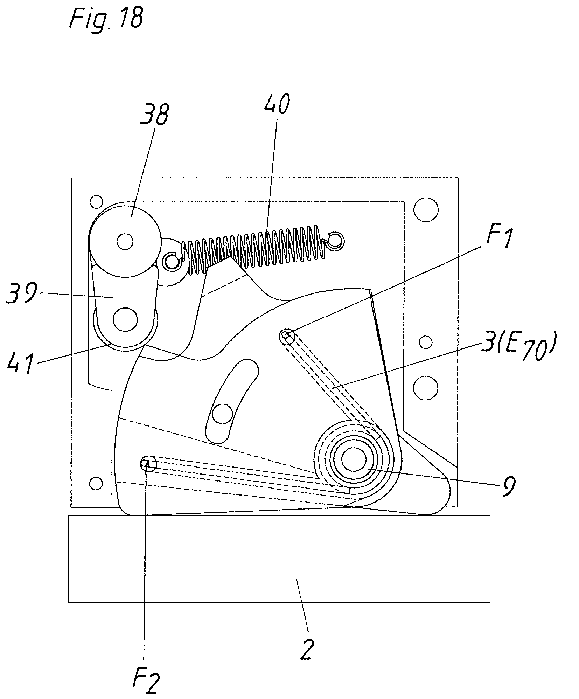

Gemäß Fig. 18 hat sich das bewegbare Möbelteil 2 noch weiter in Schließrichtung SR bewegt, wodurch der Ausstoßkraftspeicher 3 bereits eine teilgespannte Stellung E₇₀ einnimmt.

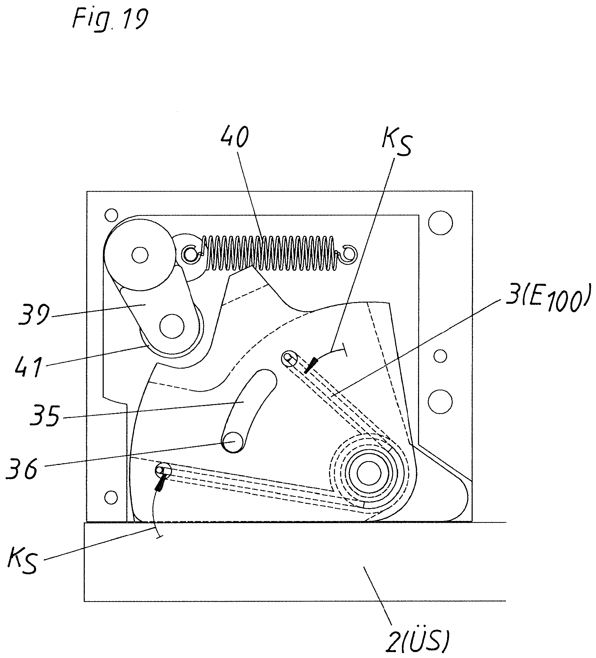

Sobald gemäß Figur 19 das bewegbare Möbelteil 2 gänzlich am Gehäuse 8 bzw. am Möbelkorpus 21 anliegt, ist die Überdrückstellung ÜS des bewegbaren Möbelteils 2 erreicht. Dadurch ist auch die gespannte Stellung E₁₀₀ des Ausstoßkraftspeichers 3 erreicht. Somit haben beide Federbasen F₁ und F₂ jeweils einen Teil des Kraftspeicher-Spannwegs K_{S} zurückgelegt. Da die Ablaufrolle 41 nicht mehr an einem der Spannelemente 6a oder 6b anliegt, kann sich auch die Zugfeder 40 entspannen und verschwenkt den Schwenkhebel 39 gegen den Uhrzeigersinn. Der Begrenzungsbolzen 36 hat das linksseitige Ende des Langlochs 35 erreicht.

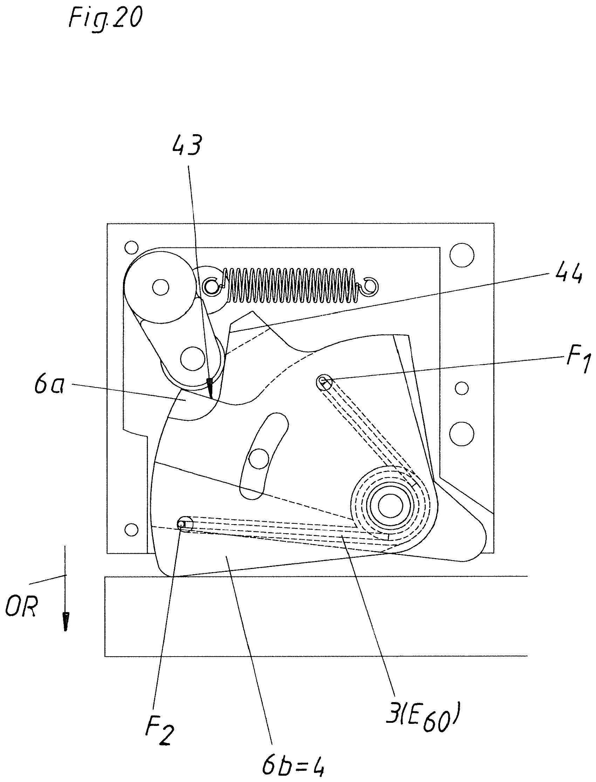

Sobald in der Stellung gemäß Fig. 19 durch einen Benutzer nicht mehr auf das bewegbare Möbelteil 2 gedrückt wird, beginnt sich der Ausstoßkraftspeicher 3, wie in Fig. 20 gezeigt, zu entspannen (die Energie E bzw. das ausgelöste Drehmoment des Ausstoßkraftspeichers 3 muss dabei größer sein als die Zuhaltekraft des Scharniere 22). Da die Ablaufrolle 41 der Haltevorrichtung 19 am Anschlag 43 des ersten Spannelements 6a anliegt, kann sich dieses Spannelement 6a nicht im Uhrzeigersinn drehen bzw. entspannen. Somit wird die gesamte Ladeenergie E des Ausstoßkraftspeichers 3 nur für eine Relativbewegung der Federbasis F₂ zum Gehäuse 8 verwendet. Dadurch bewegt sich nur das zweite Spannelement 6b - welches somit das Spannelement 4 bildet - in Öffnungsrichtung OR.

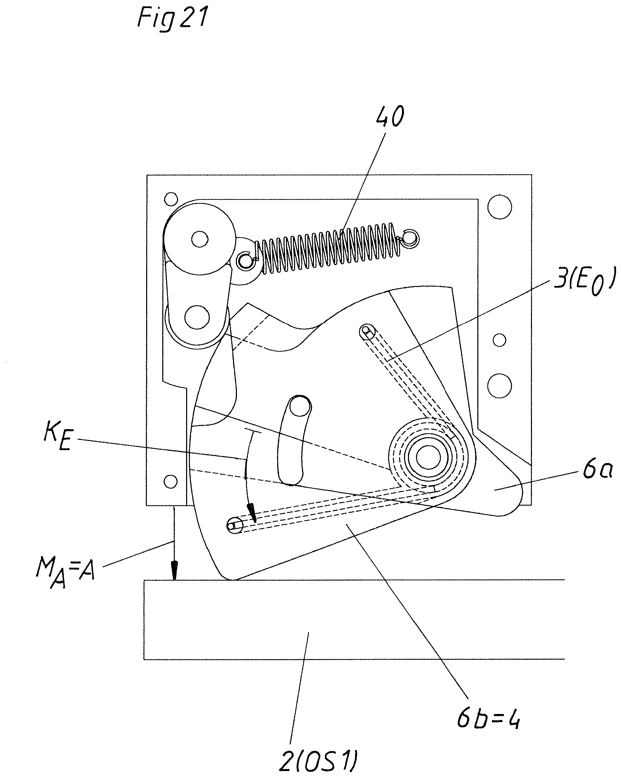

In Fig. 21 ist die Ausstoßbewegung A abgeschlossen, welche dem Möbelteil-Ausstoßweg M_{A} entspricht. Wie aus Fig. 21 auch ersichtlich ist, wurde die Ladeenergie E des Ausstoßkraftspeichers 3 nur für das Bewegen des zweiten Spannelements 6b verwendet, wodurch der Kraftspeicher-Entspannweg K_{E} zurückgelegt ist. Dadurch ist auch bei dieser Ausführungsvariante der Möbelteil-Spannweg M_{S} kleiner als der Möbelteilausstoßweg M_{A}. In Fig. 21 hat sich auch der Schwenkhebel 39 der Haltevorrichtung 19 wieder im Urzeigersinn gedreht, da die Ablaufrolle 41 an der Ablenkschräge 44 des zweiten Spannelements 6b anliegt und von dieser abgedrängt wird und somit die Haltestellung des ersten Spannelements 6a löst. In Fig. 21 ist auch der Begrenzungsbolzen 36 wieder am rechtsseitigen Ende des Langlochs 35 angelangt, wodurch sich der Ausstoßkraftspeicher 3 in der entspannten Stellung E₀ befindet.

Allgemein sei noch festgehalten, dass als Ausstoßkraftspeicher beispielsweise ein elektromagnetischer oder pneumatischer Kraftspeicher oder ein Akkumulator verstanden werden kann. Bevorzugt ist der Kraftspeicher als Feder ausgebildet. Dabei ist die Ausbildung der Feder wieder beliebig. So kann die Feder beispielsweise als Druckfeder, Zugfeder oder Ähnliches ausgebildet sein. In beiden Ausführungsvarianten ist der Ausstoßkraftspeicher als Schenkelfeder ausgebildet, wobei natürlich auch andere Federarten durchaus in gleicher funktioneller Weise eingesetzt werden können. Dies gilt vor allem dann, wenn keine Drehbewegung für das Laden des Ausstoßkraftspeichers eingesetzt wird.

Weiters sei festgehalten, dass die Antriebsvorrichtung durchaus auch eine, vorzugsweise eine herzkurvenförmige Führungsbahn aufweisende, Verriegelungsvorrichtung zum Verriegeln des Ausstoßelements in einer Verriegelungsstellung aufweisen kann. Bei den beschriebenen Ausführungsvarianten sind wird die "Verriegelung" in der Schließstellung dadurch erreicht, dass die Scharniere das bewegbare Möbelteil zuhalten. Zudem ist eine "Verriegelung" im Gegensatz zu vielen aus dem Stand der Technik bekannten Antriebsvorrichtungen auch deshalb nicht notwendig, da der Ausstoßkraftspeicher in Schließstellung ja noch gar nicht bzw. kaum gespannt ist.

Es sei weiterhin noch angeführt, dass sämtliche bevorzugte Merkmale natürlich für beiden Ausführungsvarianten - sofern funktionell sinnvoll möglich - gelten.

Bezüglich des Erfindungsaspekts, wonach bei der Überdrückbewegung zumindest die Hälfte der Ausstoßkraftspeicherladeenerige eingebracht wird, sei festgehalten, dass dies unabhängig davon erfolgen kann, wie das Verhältnis von Möbelteil-Spannweg zu Kraftspeicher-Spannweg ist. Dieser Vorteil des "Spannens beim Überdrücken" ist somit auch dann gegeben, wenn der Möbelteil-Ausstoßweg gleich groß - bzw. gleich "kurz" - ist wie der Möbelteil-Spannweg während des Überdrückens. Umgekehrt ist der gegenüber dem Möbelteil-Ausstoßweg kürzere Möbelteil-Spannweg nicht unbedingt abhängig davon, ob dieser "kurze" Möbelteil-Spannweg im Bereich der Überdrückbewegung liegt. Vielmehr kann dieser "kurze" Möbelteil-Spannweg auch irgendwo zwischen zweiter Offenstellung und Schließstellung liegen. Bevorzugt sind beide Erfindungsaspekte in einer Antriebsvorrichtung umgesetzt, wie es auch bei beiden konkreten Ausführungsvarianten der Fall ist.

### Bezugszeichenliste:

- 1: Antriebsvorrichtung
- 2: bewegbares Möbelteil
- 3: Ausstoßkraftspeicher
- 4: Ausstoßelement
- 5: Spannvorrichtung
- 6: Spannelement
- 6a: erstes Spannelement
- 6b: zweites Spannelement
- 7: Übersetzungsvorrichtung
- 8: Gehäuse
- 8a: Gehäuseteil
- 8b: Gehäuseteil
- 8c: Gehäuseteil
- 9: Achsbolzen
- 10: Spannscheibe
- 11: Rastelemente
- 12: Übersetzungsscheibe
- 13: Rastanschläge
- 14: Hebel
- 15: Ende des Hebels
- 16: anderes Ende
- 17: Zahnrad
- 18: Zähne an Übersetzungsscheibe
- 19: Haltevorrichtung
- 20: Möbel
- 21: Möbelkorpus
- 22: Scharnier
- 23: Achsausnehmung
- 24: Achsausnehmung
- 25: exzentrisch angeordnete Ausnehmung
- 26: Ausnehmung für zweite Federbasis
- 27: Ausnehmung für erste Federbasis
- 28: Führung
- 29: Drehlager
- 30: Exzenterachse am Zahnrad
- 31: Führungselemente
- 32: Hebelgelenksbolzen
- 33: Hebelgelenksbolzen
- 34: Drehbolzen
- 35: Langloch
- 36: Begrenzungsbolzen
- 37: Halteausnehmung für Begrenzungsbolzen
- 38: Drehlager
- 39: Schwenkhebel
- 40: Zugfeder
- 41: Ablaufrolle
- 42: Anschlag
- 43: Anschlag
- 44: Ablenkschräge
- A: Ausstoßbewegung
- Ü: Überdrückbewegung
- S: Schließbewegung
- O: Öffnungsbewegung
- M: Möbelteilbewegungsweg
- SS: Schließstellung
- OS: Offenstellung
- OS1: erste Offenstellung
- OS2: zweite Offenstellung
- ÜS: Überdrückstellung
- SR: Schließrichtung
- OR: Öffnungsrichtung
- E: (Lade-)Energie
- M_{S}: Möbelteil-Spannweg
- M_{A}: Möbelteil-Ausstoßweg
- E₀₋₅₀: entspannte oder teilgespannte Stellung
- E₆₀: teilgespannte Stellung
- E₇₀: teilgespannte Stellung
- E₁₀₀: gespannte Stellung
- K_{S}: Kraftspeicher-Spannweg
- K_{E}: Kraftspeicher-Entspannweg
- F₁: erste Federbasis
- F₂: zweite Federbasis
- E_{R}: Restenergie
- A_{A}: Ausstoßelement-Ausstoßweg
- A_{R}: Ausstoßelement-Rückstellweg

## Patentansprüche

1. Antriebsvorrichtung (1) für ein bewegbares Möbelteil (2), mit
- einem spannbaren Ausstoßkraftspeicher (3),
- einem vom Ausstoßkraftspeicher (3) kraftbeaufschlagten Ausstoßelement (4) zum Durchführen einer Ausstoßbewegung (A) des bewegbaren Möbelteils (2) aus einer Schließstellung (SS) in eine Offenstellung (OS), wobei durch eine Überdrückbewegung (Ü) des bewegbaren Möbelteils (2) in eine hinter der Schließstellung (SS) liegende Überdrückstellung (ÜS) die Ausstoßbewegung (A) einleitbar ist und
- einer Spannvorrichtung (5) zum Spannen des Ausstoßkraftspeichers (3) mit einer bei der Ausstoßbewegung (A) abgebbaren Energie (E),
wobei vom bewegbaren Möbelteil (2) beim Spannen des Ausstoßkraftspeichers (3) über die Spannvorrichtung (5) ein Möbelteil-Spannweg (Ms) zurücklegbar ist, in welchem der Ausstoßkraftspeicher (3) von einer entspannten oder teilgespannten Stellung (E₀₋₅₀) entlang einem Kraftspeicher-Spannweg (Ks) in eine gespannte Stellung (E₁₀₀) bewegbar ist, und wobei vom bewegbaren Möbelteil (2) beim Ausstoßen des bewegbaren Möbelteils (2) über das Ausstoßelement (4) ein Möbelteil-Ausstoßweg (M_{A}) zurücklegbar ist, in welchem der Ausstoßkraftspeicher (3) von der genannten gespannten Stellung (E₁₀₀) entlang einem Kraftspeicher-Entspannweg (K_{E}) in die genannte entspannte oder teilgespannte Stellung (E₀₋₅₀) bewegbar ist, **dadurch gekennzeichnet, dass** der Möbelteil-Ausstoßweg (M_{A}) größer ist als der Möbelteil-Spannweg (M_{S}), wobei der Möbelteil-Spannweg (M_{S}) zum Großteil einem Möbelteilbewegungsweg (M) während der Überdrückbewegung (Ü) entspricht, wobei vorgesehen ist, dass
- die Antriebsvorrichtung (1) eine zwischen einem Spannelement (6) der Spannvorrichtung (5) und dem Ausstoßelement (4) angeordnete Übersetzungsvorrichtung (7) aufweist, wobei das Übersetzungsverhältnis zwischen dem Spannelement (6) und dem Ausstoßkraftspeicher (3) beim Spannen des Ausstoßkraftspeichers (3) anders ist als zwischen dem Ausstoßelement (4) und dem Ausstoßkraftspeicher (3) beim Ausstoßen des bewegbaren Möbelteils (2).

2. Antriebsvorrichtung nach Anspruch 1, **dadurch gekennzeichnet, dass** der Möbelteil-Ausstoßweg (M_{A}) zumindest doppelt, vorzugsweise zumindest viermal, so groß ist wie der Möbelteil-Spannweg (Ms).

3. Antriebsvorrichtung nach Anspruch 1 oder 2, **dadurch gekennzeichnet, dass** das Übersetzungsverhältnis zwischen dem Spannelement (6) und dem Ausstoßkraftspeicher (3) beim Spannen des Ausstoßkraftspeichers (3) größer ist als zwischen dem Ausstoßelement (4) und dem Ausstoßkraftspeicher (3) beim Ausstoßen des bewegbaren Möbelteils (2).

4. Antriebsvorrichtung nach einem der Ansprüche 1 bis 3, **dadurch gekennzeichnet, dass** das Spannelement (6) und das Ausstoßelement (4) separat ausgebildet sind.

5. Antriebsvorrichtung nach einem der Ansprüche 1 bis 4, **dadurch gekennzeichnet, dass** die Spannvorrichtung (5)
- ein Gehäuse (8),
- einen mit dem Gehäuse (8) verbundenen Achsbolzen (9),
- eine am Achsbolzen (9) drehbar gelagerte Spannscheibe (10) mit Rastelementen (11),
- das mit der Spannscheibe (10) exzentrisch verbundene Spannelement (6),
- eine am Achsbolzen (9) drehbar gelagerte Übersetzungsscheibe (12) mit Rastanschlägen (13) für die Rastelemente (11) und
- den Ausstoßkraftspeicher (3), welcher mit einer ersten Federbasis (F₁) an der Spannscheibe (10) und mit einer zweiten Federbasis (F₂) am Gehäuse (8) gehalten ist,
aufweist.

6. Antriebsvorrichtung nach Anspruch 5, **dadurch gekennzeichnet, dass** bei der Überdrückbewegung (Ü) die Spannscheibe (10) durch das Spannelement (6) relativ zur Übersetzungsscheibe (12) drehbar ist, wodurch der Ausstoßkraftspeicher (3) von der genannten entspannten oder teilgespannten Stellung (E₀₋₅₀) in die genannte gespannte Stellung (E₁₀₀) gelangt.

7. Antriebsvorrichtung nach Anspruch 6, **dadurch gekennzeichnet, dass** in der genannten gespannten Stellung (E₁₀₀) die Spannscheibe (10) über zumindest eines der Rastelemente (11) an einem Rastanschlag (13) der Übersetzungsscheibe (12) verrastet ist.

8. Antriebsvorrichtung nach einem der Ansprüche 5 bis 7, **dadurch gekennzeichnet, dass** am Ausstoßelement (4) ein Hebel (14) über ein Ende (15) bewegbar gelagert ist und der Hebel (14) am anderen Ende (16) mit einem Zahnrad (17) exzentrisch und bewegbar verbunden ist, wobei das Zahnrad (17) mit an der Übersetzungsscheibe (12) angeordneten Zähnen (18) kämmt.

9. Antriebsvorrichtung (1) für ein bewegbares Möbelteil (2), mit
- einem spannbaren Ausstoßkraftspeicher (3),
- einem vom Ausstoßkraftspeicher (3) kraftbeaufschlagten Ausstoßelement (4) zum Durchführen einer Ausstoßbewegung (A) des bewegbaren Möbelteils (2) aus einer Schließstellung (SS) in eine Offenstellung (OS), wobei durch eine Überdrückbewegung (Ü) des bewegbaren Möbelteils (2) in eine hinter der Schließstellung (SS) liegende Überdrückstellung (ÜS) die Ausstoßbewegung (A) einleitbar ist und
- einer Spannvorrichtung (5) zum Spannen des Ausstoßkraftspeichers (3) mit einer bei der Ausstoßbewegung (A) abgebbaren Energie (E),
wobei vom bewegbaren Möbelteil (2) beim Spannen des Ausstoßkraftspeichers (3) über die Spannvorrichtung (5) ein Möbelteil-Spannweg (M_{S}) zurücklegbar ist, in welchem der Ausstoßkraftspeicher (3) von einer entspannten oder teilgespannten Stellung (E₀₋₅₀) entlang einem Kraftspeicher-Spannweg (K_{S}) in eine gespannte Stellung (E₁₀₀) bewegbar ist, und wobei vom bewegbaren Möbelteil (2) beim Ausstoßen des bewegbaren Möbelteils (2) über das Ausstoßelement (4) ein Möbelteil-Ausstoßweg (M_{A}) zurücklegbar ist, in welchem der Ausstoßkraftspeicher (3) von der genannten gespannten Stellung (E₁₀₀) entlang einem Kraftspeicher-Entspannweg (K_{E}) in die genannte entspannte oder teilgespannte Stellung (E₀₋₅₀) bewegbar ist, **dadurch gekennzeichnet, dass** der Möbelteil-Ausstoßweg (M_{A}) größer ist als der Möbelteil-Spannweg (M_{S}), wobei der Möbelteil-Spannweg (M_{S}) zum Großteil einem Möbelteilbewegungsweg (M) während der Überdrückbewegung (Ü) entspricht, wobei vorgesehen ist, dass
- der Ausstoßkraftspeicher (3) eine erste Federbasis (F₁) und eine zweite Federbasis (F₂) aufweist, wobei beim Spannen des Ausstoßkraftspeichers (3) beide Federbasen (F₁, F₂) relativ zu einem Gehäuse (8) der Antriebsvorrichtung (1) bewegbar sind und beim Ausstoßen die erste Federbasis (F₁) relativ zum Gehäuse (8) festsitzt und die zweite Federbasis (F₂) relativ zum Gehäuse (8) bewegbar ist.

10. Möbel (20) mit einem Möbelkorpus (21), einem bewegbaren Möbelteil (2) und einer Antriebsvorrichtung (1) nach einem der Ansprüche 1 bis 9 für das bewegbare Möbelteil (2).

## Claims

1. A drive device (1) for a movable furniture part, comprising
- an ejection force storage member (3) which can be tensioned,
- an ejection element (4) for carrying out an ejection movement (A) of the movable furniture part (2) from a closed position (SS) into an open position (OS), wherein the ejection movement (A) can be initiated by an over-pressing movement (Ü) of the movable furniture part (2) into an over-pressing position (ÜS) which is behind the closed position (SS), wherein the ejection element (4) is force-actuated by the ejection force storage member (3) and
- a tensioning device (5) for tensioning the ejection force storage member (3) with energy (E) which can be released during the ejection movement (A),
wherein the movable furniture part (2) can travel a furniture part tensioning distance (M_{S}) during tensioning of the ejection force storage member (3) by the tensioning device (5), in which tensioning distance (M_{S}) the ejection force storage member (3) is movable from a relaxed or partly tensioned position (E₀₋₅₀) along a force storage tensioning distance (K_{S}) into a tensioned position (E₁₀₀), and wherein a furniture part ejection distance (M_{A}) can be travelled by the movable furniture part (2) during the ejection of the movable furniture part (2) by the ejection element (4), in which ejection distance (M_{A}) the ejection force storage member (3) is movable from said tensioned position (E₁₀₀) along a force storage relaxing distance (K_{E}) into the relaxed or partly tensioned position (E₀₋₅₀), **characterized in that** the furniture part ejection distance (M_{A}) is larger than the furniture part tensioning distance (M_{S}), wherein the furniture part tensioning distance (M_{S}) for the most part corresponds to a furniture part movement distance (M) during the over-pressing movement (Ü), wherein it is provided that
- the drive device (1) comprises a transmission device (7) arranged between a tensioning element (6) of the tensioning device (5) and the ejection element (4), wherein the transmission ratio between the tensioning element (6) and the ejection force storage member (3) during tensioning of the ejection force storage member (3) is different than between the ejection element (4) and the ejection force storage member (3) during the ejection of the movable furniture part (2).

2. The drive device according to claim 1, **characterized in that** the furniture part ejection distance (M_{A}) is at least double, preferably at least four times, as large as the furniture part tensioning distance (M_{S}).

3. The drive device according to claim 1 or 2, **characterized in that** the transmission ratio between the tensioning element (6) and the ejection force storage member (3) during tensioning of the ejection force storage member (3) is larger than between the ejection element (4) and the ejection force storage member (3) during the ejection of the movable furniture part (2).

4. The drive device according to one of claims 1 to 3, **characterized in that** the tensioning element (6) and the ejection element (4) are formed separately.

5. The drive device according to one of claims 1 to 4, **characterized in that** the tensioning device (5) comprises
- a housing (8),
- an axial bolt (9) connected to the housing (8),
- a tensioning disk (10) rotationally supported on the axial bolt (9), the tensioning disk (10) comprising latching elements (11),
- the tensioning element (6) being eccentrically connected to the tensioning disk (10),
- a transmission disk (12) rotationally supported on the axial bolt (9), the transmission disk (12) comprising latching stops (13) for the latching elements (11), and
- the ejection force storage member (3) which is mounted with a first spring base (F₁) to the tensioning disk (10) and with a second spring base (F₂) to the housing (8).

6. The drive device according to claim 5, **characterized in that** the tensioning disk (10) can be rotated by the tensioning element (6) relative to the transmission disk (12) during the over-pressing movement (Ü), whereby the ejection force storage member (3) arrives from said relaxed or partly tensioned position (E₀₋₅₀) in said tensioned position (E₁₀₀).

7. The drive device according to claim 6, **characterized in that** in said tensioned position (E₁₀₀) the tensioning disk (10) is latched by means of at least one of the latching elements (11) on one latching stop (13) of the transmission disk (12).

8. The drive device according to one of the claims 5 to 7, **characterized in that** a lever (14) is movably supported via one end (15) on the ejection element (4) and the lever (14) is eccentrically and movably connected on the other end (16) to a gear wheel (17), wherein the gear wheel (17) meshes with teeth (18) arranged on the transmission disk (12).

9. A drive device (1) for a movable furniture part (2), comprising
- an ejection force storage member (3) which can be tensioned,
- an ejection element (4) for carrying out an ejection movement (A) of the movable furniture part (2) from a closed position (SS) into an open position (OS), wherein the ejection movement (A) can be initiated by an over-pressing movement (Ü) of the movable furniture part (2) into an over-pressing position (ÜS) which is behind the closed position (SS), wherein the ejection element (4) is force-actuated by the ejection force storage member (3) and
- a tensioning device (5) for tensioning the ejection force storage member (3) with energy (E) which can be released during the ejection movement (A),
wherein the movable furniture part (2) can travel a furniture part tensioning distance (M_{S}) during tensioning of the ejection force storage member (3) by the tensioning device (5), in which tensioning distance (M_{S}) the ejection force storage member (3) is movable from a relaxed or partly tensioned position (E₀₋₅₀) along a force storage tensioning distance (K_{S}) into a tensioned position (E₁₀₀), and wherein a furniture part ejection distance (M_{A}) can be travelled by the movable furniture part (2) during the ejection of the movable furniture part (2) by the ejection element (4), in which ejection distance (M_{A}) the ejection force storage member (3) is movable from said tensioned position (E₁₀₀) along a force storage relaxing distance (K_{E}) into the relaxed or partly tensioned position (E₀₋₅₀), **characterized in that** the furniture part ejection distance (M_{A}) is larger than the furniture part tensioning distance (M_{S}), wherein the furniture part tensioning distance (M_{S}) for the most part corresponds to a furniture part movement distance (M) during the over-pressing movement (Ü), wherein it is provided that
- that the ejection force storage member (3) comprises a first spring base (F₁) and a second spring base (F₂), wherein during tensioning of the ejection force storage member (3) both spring bases (F₁, F₂) are movable relative to a housing (8) of the drive device (1) and wherein during ejecting the first spring base (F₁) is fixed relative to the housing (8) and the second spring base (F₂) is movable relative to the housing (8).

10. An item of furniture (20), comprising a furniture carcass (21), a movable furniture part (2) and a drive device (1) according to one of the claims 1 to 9 for the movable furniture part (2).

## Revendications

1. Dispositif d'entraînement (1) pour une partie de meuble (2) mobile, avec
- un accumulateur de force d'éjection (3) pouvant être serré,
- un élément d'éjection (4) sollicité par force par l'accumulateur de force d'éjection (3) pour la réalisation d'un mouvement d'éjection (A) de la partie de meuble (2) mobile d'une position de fermeture (SS) à une position ouverte (OS), dans lequel le mouvement d'éjection (A) peut être introduit par un mouvement de surpression (Ü) de la partie de meuble (2) mobile dans une position de surpression (ÜS) se trouvant derrière la position de fermeture (SS) et
- un dispositif de serrage (5) pour le serrage de l'accumulateur de force d'éjection (3) avec une énergie (E) pouvant être délivrée lors du mouvement d'éjection (A),
dans lequel une course de serrage de partie de meuble (M_{S}) peut être parcourue par la partie de meuble (2) mobile lors du serrage de l'accumulateur de force d'éjection (3) par le biais du dispositif de serrage (5), dans laquelle l'accumulateur de force d'éjection (3) est mobile d'une position (E₀₋₅₀) desserrée ou partiellement serrée le long d'une course de serrage d'accumulateur de force (K_{S}) dans une position serrée (E₁₀₀), et dans lequel une course d'éjection de partie de meuble (M_{A}) peut être parcourue par la partie de meuble (2) mobile lors de l'éjection de la partie de meuble (2) mobile par le biais de l'élément d'éjection (4), dans laquelle l'accumulateur de force d'éjection (3) est mobile de la position serrée (E₁₀₀) citée le long d'une course de desserrage d'accumulateur de force (K_{E}) dans la position (E₀₋₅₀) desserrée ou partiellement serrée citée, **caractérisé en ce que** la course d'éjection de partie de meuble (M_{A}) est supérieure à la course de serrage de partie de meuble (M_{S}), dans lequel la course de serrage de partie de meuble (M_{S}) correspond en grande partie à une course de mouvement de partie de meuble (M) pendant le mouvement de surpression (Ü), dans lequel il est prévu que
- le dispositif d'entraînement (1) présente un dispositif de transmission (7) agencé entre un élément de serrage (6) du dispositif de serrage (5) et l'élément d'éjection (4), dans lequel le rapport de transmission entre l'élément de serrage (6) et l'accumulateur de force d'éjection (3) lors du serrage de l'accumulateur de force d'éjection (3) est différent de celui entre l'élément d'éjection (4) et l'accumulateur de force d'éjection (3) lors de l'éjection de la partie de meuble (2) mobile.

2. Dispositif d'entraînement selon la revendication 1, **caractérisé en ce que** la course d'éjection de partie de meuble (M_{A}) est au moins deux fois, de préférence au moins quatre fois, plus grande que la course de serrage de partie de meuble (M_{S}).

3. Dispositif d'entraînement selon la revendication 1 ou 2, **caractérisé en ce que** le rapport de transmission entre l'élément de serrage (6) et l'accumulateur de force d'éjection (3) lors du serrage de l'accumulateur de force d'éjection (3) est plus grand que celui entre l'élément d'éjection (4) et l'accumulateur de force d'éjection (3) lors de l'éjection de la partie de meuble (2) mobile.

4. Dispositif d'entraînement selon l'une quelconque des revendications 1 à 3, **caractérisé en ce que** l'élément de serrage (6) et l'élément d'éjection (4) sont réalisés séparément.

5. Dispositif d'entraînement selon l'une quelconque des revendications 1 à 4, **caractérisé en ce que** le dispositif de serrage (5) présente
- un boîtier (8),
- une broche axiale (9) reliée au boîtier (8),
- une rondelle de serrage (10) montée de manière rotative sur la broche axiale (9) avec des éléments d'encliquetage (11),
- l'élément de serrage (6) relié de manière excentrique à la rondelle de serrage (10),
- une rondelle de transmission (12) montée de manière rotative sur la broche axiale (9) avec des butées d'encliquetage (13) pour les éléments d'encliquetage (11) et
- l'accumulateur de force d'éjection (3), qui est maintenu avec une première base de ressort (F₁) sur la rondelle de serrage (10) et avec une deuxième base de ressort (F₂) sur le boîtier (8).

6. Dispositif d'entraînement selon la revendication 5, **caractérisé en ce que** lors du mouvement de surpression (Ü) la rondelle de serrage (10) est rotative par l'élément de serrage (6) par rapport à la rondelle de transmission (12), par quoi l'accumulateur de force d'éjection (3) parvient de la position (E₀₋₅₀) desserrée ou partiellement serrée citée à la position serrée (E₁₀₀) citée.

7. Dispositif d'entraînement selon la revendication 6, **caractérisé en ce que** dans la position serrée (E₁₀₀) citée la rondelle de serrage (10) est encliquetée par le biais d'au moins un des éléments d'encliquetage (11) contre une butée d'encliquetage (13) de la rondelle de transmission (12).

8. Dispositif d'entraînement selon l'une quelconque des revendications 5 à 7, **caractérisé en ce qu'**un levier (14) est monté de manière mobile par une extrémité (15) à l'élément d'éjection (4), et le levier (14) est relié de manière excentrique et mobile, par l'autre extrémité (16), à une roue dentée (17), dans lequel la roue dentée (17) engrène avec des dents (18) agencées sur la rondelle de transmission (12).

9. Dispositif d'entraînement (1) pour une partie de meuble (2) mobile, avec
- un accumulateur de force d'éjection (3) pouvant être serré,
- un élément d'éjection (4) sollicité par force par l'accumulateur de force d'éjection (3) pour la réalisation d'un mouvement d'éjection (A) de la partie de meuble (2) mobile d'une position de fermeture (SS) à une position ouverte (OS), dans lequel le mouvement d'éjection (A) peut être introduit par un mouvement de surpression (Ü) de la partie de meuble (2) mobile dans une position de surpression (ÜS) se trouvant derrière la position de fermeture (SS) et
- un dispositif de serrage (5) pour le serrage de l'accumulateur de force d'éjection (3) avec une énergie (E) pouvant être délivrée lors du mouvement d'éjection (A),
dans lequel une course de serrage de partie de meuble (M_{S}) peut être parcourue par la partie de meuble (2) mobile lors du serrage de l'accumulateur de force d'éjection (3) par le biais du dispositif de serrage (5), dans laquelle l'accumulateur de force d'éjection (3) est mobile d'une position (E₀₋₅₀) desserrée ou partiellement serrée le long d'une course de serrage d'accumulateur de force (K_{S}) à une position serrée (E₁₀₀), et dans lequel une course d'éjection de partie de meuble (M_{A}) peut être parcourue par la partie de meuble (2) mobile lors de l'éjection de la partie de meuble (2) mobile par le biais de l'élément d'éjection (4), dans laquelle l'accumulateur de force d'éjection (3) est mobile de la position serrée (E₁₀₀) citée le long d'une course de desserrage d'accumulateur de force (K_{E}) dans la position (E₀₋₅₀) desserrée ou partiellement serrée citée, **caractérisé en ce que** la course d'éjection de partie de meuble (M_{A}) est supérieure à la course de serrage de partie de meuble (M_{S}), dans lequel la course de serrage de partie de meuble (M_{S}) correspond en grande partie à une course de mouvement de partie de meuble (M) pendant le mouvement de surpression (Ü), dans lequel il est prévu que
- l'accumulateur de force d'éjection (3) présente une première base de ressort (F₁) et une deuxième base de ressort (F₂), dans lequel lors du serrage de l'accumulateur de force d'éjection (3) les deux bases de ressort (F₁, F₂) sont mobiles par rapport à un boîtier (8) du dispositif d'entraînement (1) et lors de l'éjection la première base de ressort (F₁) est immobilisée par rapport au boîtier (8) et la deuxième base de ressort (F₂) est mobile par rapport au boîtier (8).

10. Meuble (20) avec un corps de meuble (21), une partie de meuble (2) mobile et un dispositif d'entraînement (1) selon l'une quelconque des revendications 1 à 9 pour la partie de meuble (2) mobile.
